# EUROPEAN PATENT APPLICATION

(11) **EP 4 738 913 A1**
(43) Date of publication of application: **06.05.2026**
(21) Application number: 24853680.7
(22) Date of filing: 09.08.2024
(51) Int. Cl.: H04W 24/02

(54) **BEAM-BASED COMMUNICATION METHOD AND RELATED APPARATUS**

(30) Priority: 11.08.2023 CN 202311019046
(71) Applicant: Huawei Technologies Co., Ltd., Shenzhen, Guangdong 518129 (CN)
(72) Inventor: YUAN, Shitong, Shenzhen, Guangdong 518129 (CN); ZHANG, Jiayin, Shenzhen, Guangdong 518129 (CN); CHEN, Lei, Shenzhen, Guangdong 518129 (CN)
(74) Representative: Körber, Martin Hans
(86) International application number: PCT/CN2024/110929
(87) International publication number: WO 2025/036270

(57) **Abstract**

Embodiments of this application provide a beam-based communication method and a related apparatus. The method includes: A terminal device receives first indication information of a transmission configuration indicator, where the first indication information is used for activating a TCI state of a candidate cell, the activated TCI state of the candidate cell includes a first TCI state, and the first TCI state includes one or more TCI states; and the terminal device measures a first synchronization signal block SSB based on the first indication information, to obtain a first measurement result, where the first SSB and at least one channel state information reference signal CSI-RS have a quasi-colocation QCL relationship, the at least one CSI-RS is a reference signal in QCL information of the first TCI state, a type of the QCL information of the first TCI state is type A and/or type D, the first SSB is an SSB of the candidate cell, and the at least one CSI-RS is a CSI-RS of the candidate cell. An SSB associated with a TCI state is measured in advance by using the first indication information, to quickly activate the TCI state. Therefore, communication interruption time of the terminal device is reduced, and communication quality of the terminal device is improved.

## Description

This application claims priority to Chinese Patent Application No. 202311019046.3, filed with the China National Intellectual Property Administration on August 11, 2024 and entitled "BEAM-BASED COMMUNICATION METHOD AND RELATED APPARATUS", which is incorporated herein by reference in its entirety.

### TECHNICAL FIELD

This application relates to the field of communication technologies, and in particular, to a beam-based communication method and a related apparatus.

### BACKGROUND

The 5th generation (5th generation, 5G) mobile communication system uses high-frequency communication, that is, uses ultra-high frequency band (greater than 6 GHz) signals for data transmission. A main problem of the high-frequency communication is that signal energy sharply decreases with a transmission distance, resulting in a short signal transmission distance. To overcome this problem, high-frequency communication uses an analog beam technology, and adopts a large-scale antenna array for processing, to concentrate signal energy within a small range, to form a beam-like signal known as an analog beam (referred to as a beam for short), thereby extending a transmission distance. A network device may generate different beams pointing in different transmission directions. During downlink data transmission, the network device sends data to a terminal device by using a specific beam, and notifies the terminal device of information about a transmission beam used by the network device. In this way, the terminal device uses a correct reception beam (that is, a reception beam corresponding to the transmission beam) to receive the data sent by the network device.

In a process in which the terminal device is handed over from a serving cell to a candidate cell, the terminal device receives a handover command sent by the serving cell. The handover command further indicates a transmission configuration indicator (transmission configuration indicator, TCI) state. In response to the handover command, the terminal device applies configuration information related to the candidate cell, where the configuration information of the candidate cell includes a TCI state indicated by the handover command. The terminal device obtains resource configuration information of a corresponding reference signal based on the TCI state, where the reference signal includes a tracking reference signal (tracking reference signal, TRS). After parsing the configuration information, the terminal device enters a tracking and measurement phase. Details are as follows: First, the terminal device tracks and measures a determined synchronization signal and broadcast channel resource block (Synchronization Signal and PBCH Block, SSB), and determines beam information based on a measurement result of the SSB. Then, the terminal device needs to track and measure the determined TRS based on the beam information, where there is a correspondence between the TRS and the SSB, to obtain a measurement result of the TRS. Finally, the terminal device activates the TCI state based on the measurement result of the TRS.

The applicant finds through research that, the terminal device can parse the configuration information related to the candidate cell only after receiving the handover command, then measure the SSB and the TRS that correspond to the TCI state of the candidate cell, and finally activate the TCI state based on the measurement result. The foregoing process involves significant latency, resulting in a long communication suspension for the terminal device, and reducing communication quality.

### SUMMARY

According to a first aspect, an embodiment of this application provides a beam-based communication method, including:

A terminal device receives first indication information of a transmission configuration indicator, where the first indication information is used for activating a TCI state of a candidate cell, the activated TCI state of the candidate cell includes a first TCI state, and the first TCI state includes one or more TCI states; and
the terminal device measures a first synchronization signal block SSB based on the first indication information, to obtain a first measurement result, where the first SSB and at least one channel state information reference signal CSI-RS have a quasi-colocation QCL relationship, the at least one CSI-RS is a reference signal in QCL information of the first TCI state, a type of the QCL information of the first TCI state is type A and/or type D, the first SSB is an SSB of the candidate cell, and the at least one CSI-RS is a CSI-RS of the candidate cell.

Optionally, the first TCI state further includes a TCI state whose QCL information is of type B and/or type C. The type of the QCL information of the first TCI state is not limited in embodiments of this application.

In this embodiment of this application, in a scenario in which the terminal device is handed over from a serving cell to the candidate cell, the terminal device may determine, based on the received first indication information, the first TCI state that needs to be activated. Then, the terminal device determines the first synchronization signal block SSB based on the first TCI state, and measures the first SSB in advance to obtain the first measurement result. An SSB associated with a TCI state is measured in advance by using the first indication information, to quickly activate the TCI state. Therefore, communication interruption time of the terminal device is reduced, and communication quality of the terminal device is improved.

With reference to the first aspect, in an optional implementation of the first aspect, the method further includes: The terminal device receives a handover command, where the handover command instructs the terminal device to be handed over from the serving cell to the candidate cell, the handover command indicates a second TCI state, and the second TCI state belongs to the first TCI state; the terminal device measures, based on the first measurement result, a reference signal corresponding to the second TCI state, to obtain a second measurement result; and the terminal device activates the second TCI state based on the second measurement result.

In this embodiment of this application, after receiving the handover command, the terminal device measures, based on the first measurement result, the reference signal corresponding to the second TCI state, to obtain the second measurement result; and activates the second TCI state based on the second measurement result, where the activated second TCI state is used for data transmission. Therefore, communication interruption time of the terminal device is reduced, and communication quality of the terminal device is improved.

With reference to the first aspect, in an optional implementation of the first aspect, that the terminal device measures the first synchronization signal block SSB based on the first indication information, to obtain the first measurement result includes: The terminal device determines the QCL information of the first TCI state based on the first indication information; the terminal device determines, based on the QCL information of the first TCI state, the at least one CSI-RS corresponding to the first TCI state; the terminal device determines a third TCI state based on configuration information of the at least one CSI-RS, where the configuration information of the at least one CSI-RS includes identification information of the third TCI state, and the third TCI state is used for determining a reception parameter for receiving a reference signal corresponding to the first TCI state; the terminal device determines the first SSB based on QCL information of the third TCI state, where the QCL information of the third TCI state includes index information of the first SSB; and the terminal device measures the first SSB, to obtain the first measurement result.

Specifically, the configuration information of the at least one CSI-RS includes the identification information of the third TCI state, and the third TCI state is used for determining the reception parameter for receiving the reference signal corresponding to the first TCI state. The reception parameter includes but is not limited to a time offset compensation, a frequency offset compensation, a reception beam, and/or the like. Because the QCL information of the third TCI state includes the index information of the first SSB, the terminal device determines the first SSB based on the index information of the first SSB in the QCL information in the third TCI state. According to the foregoing method, the first SSB is measured to obtain the first measurement result, to improve implementation flexibility of the solution.

With reference to the first aspect, in an optional implementation of the first aspect, a quasi-colocation QCL type of the third TCI state is type C and/or type D. A TCI state whose QCL type is type C and/or type D is associated with an SSB. Therefore, the first SSB may be determined based on the third TCI state.

With reference to the first aspect, in an optional implementation of the first aspect, the first TCI state further includes a fourth TCI state, and a quasi-colocation QCL type of the fourth TCI state is type C and/or type D. The first TCI state may include TCI states of a plurality of QCL types, to improve implementation flexibility of the solution.

With reference to the first aspect, in an optional implementation of the first aspect, that the terminal device measures the first synchronization signal block SSB based on the first indication information, to obtain the first measurement result includes: The terminal device determines QCL information of the fourth TCI state based on the first indication information, where the QCL information of the fourth TCI state indicates that a source reference signal of the fourth TCI state includes an SSB; the terminal device determines the first SSB based on the QCL information of the fourth TCI state, where the QCL information of the fourth TCI state includes the index information of the first SSB; and the terminal device measures the first SSB to obtain the first measurement result. According to the foregoing method, the first SSB is measured to obtain the first measurement result, to improve implementation flexibility of the solution.

With reference to the first aspect, in an optional implementation of the first aspect, before that the terminal device receives the first indication information, the method further includes: The terminal device receives configuration information, where the configuration information includes QCL information of the TCI state of the candidate cell and/or related information of the CSI-RS of the candidate cell. The configuration information is configuration information that is of the candidate cell and that is related to the TCI state. For example, the configuration information includes: the quasi-colocation QCL information of the TCI state of the candidate cell and/or the related information of the CSI-RS of the candidate cell. The related information of the CSI-RS of the candidate cell specifically includes configuration information of the CSI-RS, where the configuration information is used for determining time domain and frequency domain resource configurations of the CSI-RS. The configuration information may further include configuration information of a TRS of the candidate cell, where the configuration information of the TRS includes a TCI state identifier required for receiving the TRS. The configuration information is parsed in advance, to reduce a processing delay of the terminal device, and reduce communication interruption time of the terminal device, so as to improve communication quality.

With reference to the first aspect, in an optional implementation of the first aspect, before that the terminal device measures, based on the first measurement result, the reference signal corresponding to the second TCI state, to obtain the second measurement result, the method further includes: The terminal device determines, as a default beam based on the first measurement result, a TCI corresponding to the first SSB, where the default beam is used for signal transmission with a serving cell after handover, and the serving cell after handover is the candidate cell. The TCI corresponding to the first SSB is used as the default beam, and signal transmission is performed by using the default beam before the terminal device activates the second TCI state, so that communication interruption time of the terminal device is further reduced, and communication quality is improved.

With reference to the first aspect, in an optional implementation of the first aspect, a TCI corresponding to a reference signal in the first TCI state is not allowed to be indicated by the handover command, or a TCI corresponding to a reference signal in the first TCI state is not allowed to be used for data transmission after the handover command is received. That the TCI corresponding to the reference signal in the first TCI state is not allowed to be indicated by the handover command may also be understood as follows: A TCI indicated by the handover command does not include the TCI corresponding to the reference signal in the first TCI state, and a TCI activated by the handover command is used for data transmission. The reference signal includes but is not limited to a TRS or a CSI-RS. The TCI is restricted from being used for data transmission, so that normal communication of the terminal device is not affected, to improve communication quality of the terminal device.

According to a second aspect, an embodiment of this application provides a beam-based communication method, including:

A terminal device receives first indication information of a transmission configuration indicator, where the first indication information is used for activating a TCI state of a candidate cell, the activated TCI state of the candidate cell includes a first TCI state, and the first TCI state includes one or more TCI states; and
the terminal device measures a first synchronization signal block SSB based on the first indication information, to obtain a first measurement result, where the first SSB and at least one channel state information reference signal CSI-RS have a quasi-colocation QCL relationship, the at least one CSI-RS is a reference signal in QCL information of the first TCI state, a type of the QCL information of the first TCI state is type C and/or type D, the first SSB is an SSB of the candidate cell, and the at least one CSI-RS is a CSI-RS of the candidate cell.

Optionally, the first TCI state further includes a TCI state whose QCL information is of type B and/or type C. The type of the QCL information of the first TCI state is not limited in embodiments of this application.

In this embodiment of this application, in a scenario in which the terminal device is handed over from a serving cell to the candidate cell, the terminal device may determine, based on the received first indication information, the first TCI state that needs to be activated. Then, the terminal device determines the first synchronization signal block SSB based on the first TCI state, and measures the first SSB in advance to obtain the first measurement result. An SSB associated with a TCI state is measured in advance by using the first indication information, to quickly activate the TCI state. Therefore, communication interruption time of the terminal device is reduced, and communication quality of the terminal device is improved.

With reference to the second aspect, in an optional implementation of the second aspect, the method further includes: The terminal device receives a handover command, where the handover command instructs the terminal device to be handed over from the serving cell to the candidate cell, the handover command indicates a second TCI state, and the second TCI state belongs to the first TCI state; the terminal device measures, based on the first measurement result, a reference signal corresponding to the second TCI state, to obtain a second measurement result; and the terminal device activates the second TCI state based on the second measurement result.

In this embodiment of this application, after receiving the handover command, the terminal device measures, based on the first measurement result, the reference signal corresponding to the second TCI state, to obtain the second measurement result; and activates the second TCI state based on the second measurement result, where the activated second TCI state is used for data transmission. Therefore, communication interruption time of the terminal device is reduced, and communication quality of the terminal device is improved.

With reference to the second aspect, in an optional implementation of the second aspect, the first TCI state includes a fourth TCI state, and a quasi-colocation QCL type of the fourth TCI state is type C and/or type D.

With reference to the second aspect, in an optional implementation of the second aspect, that the terminal device measures the first synchronization signal block SSB based on the first indication information, to obtain the first measurement result includes: The terminal device determines QCL information of the fourth TCI state based on the first indication information, where the QCL information of the fourth TCI state indicates that a source reference signal of the fourth TCI state includes an SSB; the terminal device determines the first SSB based on the QCL information of the fourth TCI state, where the QCL information of the fourth TCI state includes the index information of the first SSB; and the terminal device measures the first SSB to obtain the first measurement result. According to the foregoing method, the first SSB is measured to obtain the first measurement result, to improve implementation flexibility of the solution.

With reference to the second aspect, in an optional implementation of the second aspect, before that the terminal device receives the first indication information, the method further includes: The terminal device receives configuration information, where the configuration information includes QCL information of the TCI state of the candidate cell and/or related information of the CSI-RS of the candidate cell. The configuration information is configuration information that is of the candidate cell and that is related to the TCI state. For example, the configuration information includes: the quasi-colocation QCL information of the TCI state of the candidate cell and/or the related information of the CSI-RS of the candidate cell. The related information of the CSI-RS of the candidate cell specifically includes configuration information of the CSI-RS, where the configuration information is used for determining time domain and frequency domain resource configurations of the CSI-RS. The configuration information may further include configuration information of a TRS of the candidate cell, where the configuration information of the TRS includes a TCI state identifier required for receiving the TRS. The configuration information is parsed in advance, to reduce a processing delay of the terminal device, and reduce communication interruption time of the terminal device, so as to improve communication quality.

With reference to the second aspect, in an optional implementation of the second aspect, before that the terminal device measures, based on the first measurement result, the reference signal corresponding to the second TCI state, to obtain the second measurement result, the method further includes: The terminal device determines, as a default beam based on the first measurement result, a TCI corresponding to the first SSB, where the default beam is used for signal transmission with a serving cell after handover, and the serving cell after handover is the candidate cell. The TCI corresponding to the first SSB is used as the default beam, and signal transmission is performed by using the default beam before the terminal device activates the second TCI state, so that communication interruption time of the terminal device is further reduced, and communication quality is improved.

With reference to the second aspect, in an optional implementation of the second aspect, a TCI corresponding to a reference signal in the first TCI state is not allowed to be indicated by the handover command, or a TCI corresponding to a reference signal in the first TCI state is not allowed to be used for data transmission after the handover command is received. That the TCI corresponding to the reference signal in the first TCI state is not allowed to be indicated by the handover command may also be understood as follows: A TCI indicated by the handover command does not include the TCI corresponding to the reference signal in the first TCI state, and a TCI activated by the handover command is used for data transmission. The reference signal includes but is not limited to a TRS or a CSI-RS. The TCI is restricted from being used for data transmission, so that normal communication of the terminal device is not affected, to improve communication quality of the terminal device.

According to a third aspect, an embodiment of this application provides a beam-based communication method, including:

A terminal device receives a handover command, where the handover command instructs the terminal device to be handed over from a serving cell to a candidate cell; and
the terminal device determines a default beam when any one or more of first conditions are satisfied, where the default beam is used for signal transmission with a serving cell after handover, and the serving cell after handover is the candidate cell, where
the first condition includes: the handover command does not indicate a transmission configuration indicator TCI, and the terminal device determines a TA based on a measurement result of a downlink reference signal; or
the handover command does not indicate a timing advance TA, and the terminal device determines the TA based on a measurement result of a downlink reference signal; or
the handover command indicates a TA, and the terminal device determines that a TA of the candidate cell is the same as a TA of the serving cell; or
the handover command indicates a TA, and the terminal device determines that a TA of the candidate cell is 0; or
a TCI indicated in the handover command is not activated in advance; or
a source reference signal of a TCI indicated in the handover command includes a channel state information reference signal CSI-RS, and the terminal device does not measure the CSI-RS before receiving the handover command; or
the handover command indicates a TCI, the terminal device feeds back a hybrid automatic repeat request acknowledgment HARQ-ACK based on the handover command, and a moment at which the HARQ-ACK is fed back does not reach a beam effective time point.

Specifically, that the terminal device determines the TA based on the measurement result of the downlink reference signal includes: Before the terminal device is handed over from the serving cell to the candidate cell, a network device in the serving cell configures the terminal device. Specifically configured information includes but is not limited to: the terminal device calculating the timing advance based on a time difference between measured arrival time of an SSB of the serving cell and measured arrival time of an SSB of the candidate cell. Based on the configured information, the terminal device calculates the timing advance based on the time difference between the arrival time of the two SSBs.

In this embodiment of this application, when the terminal device has no valid beam indicated by the handover command, and cannot determine the default beam by using a random access channel (RACH) beam, the terminal device may determine the default beam by using the foregoing method. The default beam is used for signal transmission with the serving cell after handover. Therefore, communication interruption time of the terminal device is reduced, and communication quality of the terminal device is improved.

With reference to the third aspect, in an optional implementation of the third aspect, that the terminal device determines the default beam when one or more of the following first conditions are satisfied includes: The first condition includes: The handover command does not indicate the transmission configuration indicator TCI, and the terminal device determines the TA based on the measurement result of the downlink reference signal; or the handover command does not indicate the timing advance TA, and the terminal device determines the TA based on the measurement result of the downlink reference signal. That the terminal device determines the default beam includes: The terminal device determines a second synchronization signal block SSB as the default beam, where the second SSB is an SSB of the candidate cell, and the second SSB is used for measuring the TA of the candidate cell, or the second SSB and a reference signal for measuring the TA of the candidate cell have a quasi-colocation QCL relationship. According to the foregoing method, when a specific first condition is satisfied, the terminal device may determine the second SSB as the default beam, to improve implementation flexibility of the solution.

With reference to the third aspect, in an optional implementation of the third aspect, the second SSB is a 1^{st} SSB in a first SSB set, the first SSB set includes a plurality of SSBs, and the first SSB set is used for measuring the TA of the candidate cell; or the second SSB is an SSB that is of the candidate cell and that is most recently reported by the terminal device to a network device. According to the foregoing method, communication quality of the terminal device is improved.

With reference to the third aspect, in an optional implementation of the third aspect, that the second SSB is the SSB that is of the candidate cell and that is most recently reported by the terminal device to the network device includes: The second SSB is an SSB having a highest reference signal power RSRP in the SSBs that are of the candidate cell and that are reported by the terminal device to the network device. Specifically, the terminal device periodically measures the SSBs of the candidate cell, and then reports a measured strength to the network device in the serving cell. The serving cell determines, based on the measurement strength, whether to perform handover from the serving cell to the candidate cell. According to the foregoing method, communication quality of the terminal device is improved, and handover interruption time is reduced.

With reference to the third aspect, in an optional implementation of the third aspect, that the terminal device determines the default beam when one or more of the following first conditions are satisfied includes: The first condition includes: The handover command indicates the TA, and the terminal device determines that the TA of the candidate cell is the same as the TA of the serving cell; or the handover command indicates the TA, and the terminal device determines that the TA of the candidate cell is 0. That the terminal device determines the default beam includes: The terminal device determines, based on the handover command, a fifth TCI state indicated by the handover command; and the terminal device determines a first reference signal as the default beam, or the terminal device determines, as the default beam, a synchronization signal block SSB associated with a first reference signal, where the first reference signal is a reference signal indicated by quasi-colocation QCL information of the fifth TCI state. According to the foregoing method, when a specific first condition is satisfied, the terminal device may determine, as the default beam, the first reference signal or the synchronization signal block SSB associated with the first reference signal, to improve implementation flexibility of the solution and reduce handover interruption time.

With reference to the third aspect, in an optional implementation of the third aspect, a type of the QCL information of the third TCI state is type D, and the first reference signal is a channel state information reference signal CSI-RS.

With reference to the third aspect, in an optional implementation of the third aspect, that the terminal device determines the default beam when one or more of the following first conditions are satisfied includes: The first condition includes: The handover command indicates the TA, and the terminal device determines that the TA of the candidate cell is the same as the TA of the serving cell; or the handover command indicates the TA, and the terminal device determines that the TA of the candidate cell is 0. That the terminal device determines the default beam includes: The terminal device determines, from synchronization signal blocks SSBs that are of the candidate cell and that are reported by the terminal device to the network device, an SSB having a highest reference signal received power; and the terminal device determines, as the default beam, the SSB having the highest reference signal received power. According to the foregoing method, when a specific first condition is satisfied, the terminal device may determine, as the default beam, the SSB having the highest reference signal received power, to improve implementation flexibility of the solution, ensure communication quality of the terminal device, and reduce handover interruption time.

With reference to the third aspect, in an optional implementation of the third aspect, the first condition further includes: The serving cell includes one primary cell and at least one secondary cell, or the candidate cell includes one primary cell and at least one secondary cell, and the primary cell and the secondary cell belong to a same timing advance group TAG. That the terminal device determines the default beam includes: The terminal device determines, as the default beam, a synchronization signal block SSB for measuring a TA of the primary cell. Specifically, the terminal device obtains only the TA of the primary cell (primary cell, PCell), and the secondary cell (secondary cell, SCell) and the PCell belong to the same timing advance group (Timing Advance Group, TAG). In a scenario in which the terminal device configures carrier aggregation in the serving cell and also configures carrier aggregation in the serving cell after handover (candidate cell), the default beam may be determined. This improves implementation flexibility of the solution, ensures communication quality of the terminal device, and reduces handover interruption time.

With reference to the third aspect, in an optional implementation of the third aspect, the default beam is used by the primary cell for signal transmission, and the default beam is further used by the secondary cell for signal transmission; and the primary cell and the secondary cell are configured in a first set, and the first set is used for configuring a plurality of cells to update a beam based on at least one beam indication.

With reference to the third aspect, in an optional implementation of the third aspect, the method further includes: The terminal device obtains a TA of a target cell in the plurality of cells indicated by the first set, where the target cell is any cell indicated by the first set; the terminal device determines a third synchronization signal block SSB based on the TA of the target cell, where the third SSB is used for measuring the TA of the target cell, and the third SSB is an SSB of the candidate cell; and the terminal device determines the third SSB as the default beam of any one or more cells in the first set.

According to a fourth aspect, an embodiment of this application provides a communication apparatus, including:
a transceiver module, configured to receive first indication information of a transmission configuration indicator, where the first indication information is used for activating a TCI state of a candidate cell, the activated TCI state of the candidate cell includes a first TCI state, and the first TCI state includes one or more TCI states; and
a processing module, configured to measure a first synchronization signal block SSB based on the first indication information, to obtain a first measurement result, where the first SSB and at least one channel state information reference signal CSI-RS have a quasi-colocation QCL relationship, the at least one CSI-RS is a reference signal in QCL information of the first TCI state, a type of the QCL information of the first TCI state is type A and/or type D, the first SSB is an SSB of the candidate cell, and the at least one CSI-RS is a CSI-RS of the candidate cell.

In some optional implementations of this application, the transceiver module is further configured to receive a handover command, where the handover command instructs the terminal device to be handed over from a serving cell to the candidate cell, the handover command indicates a second TCI state, and the second TCI state belongs to the first TCI state;
the processing module is further configured to measure, based on the first measurement result, a reference signal corresponding to the second TCI state, to obtain a second measurement result; and
the processing module is further configured to activate the second TCI state based on the second measurement result.

In some optional implementations of this application, the processing module is further configured to determine the QCL information of the first TCI state based on the first indication information;
the processing module is further configured to determine, based on the QCL information of the first TCI state, the at least one CSI-RS corresponding to the first TCI state;
the processing module is further configured to determine a third TCI state based on configuration information of the at least one CSI-RS, where the configuration information of the at least one CSI-RS includes identification information of the third TCI state, and the third TCI state is used for determining a reception parameter for receiving a reference signal corresponding to the first TCI state;
the processing module is further configured to determine the first SSB based on QCL information of the third TCI state, where the QCL information of the third TCI state includes index information of the first SSB; and
the processing module is further configured to measure the first SSB to obtain the first measurement result.

In some optional implementations of this application, a quasi-colocation QCL type of the third TCI state is type C and/or type D.

In some optional implementations of this application, the first TCI state further includes a fourth TCI state, and a quasi-colocation QCL type of the fourth TCI state is type C and/or type D.

In some optional implementations of this application, the processing module is further configured to determine QCL information of the fourth TCI state based on the first indication information, where the QCL information of the fourth TCI state indicates that a source reference signal of the fourth TCI state includes an SSB;
the processing module is further configured to determine the first SSB based on the QCL information of the fourth TCI state, where the QCL information of the fourth TCI state includes the index information of the first SSB; and
the processing module is further configured to measure the first SSB to obtain the first measurement result.

In some optional implementations of this application, the transceiver module is further configured to receive configuration information, where the configuration information includes QCL information of the TCI state of the candidate cell and/or related information of the CSI-RS of the candidate cell.

In some optional implementations of this application, the processing module is further configured to determine, as a default beam based on the first measurement result, a TCI corresponding to the first SSB, where the default beam is used for signal transmission with a serving cell after handover, and the serving cell after handover is the candidate cell.

In some optional implementations of this application, a TCI corresponding to a reference signal in the first TCI state is not allowed to be indicated by the handover command, or a TCI corresponding to a reference signal in the first TCI state is not allowed to be used for data transmission after the handover command is received.

According to a fifth aspect, an embodiment of this application provides a communication apparatus, including:
a transceiver module, configured to receive first indication information of a transmission configuration indicator, where the first indication information is used for activating a TCI state of a candidate cell, the activated TCI state of the candidate cell includes a first TCI state, and the first TCI state includes one or more TCI states; and
a processing module, configured to measure a first synchronization signal block SSB based on the first indication information, to obtain a first measurement result, where the first SSB and at least one channel state information reference signal CSI-RS have a quasi-colocation QCL relationship, the at least one CSI-RS is a reference signal in QCL information of the first TCI state, a type of the QCL information of the first TCI state is type C and/or type D, the first SSB is an SSB of the candidate cell, and the at least one CSI-RS is a CSI-RS of the candidate cell.

In some optional implementations of this application, the transceiver module is further configured to receive a handover command, where the handover command instructs the terminal device to be handed over from a serving cell to the candidate cell, the handover command indicates a second TCI state, and the second TCI state belongs to the first TCI state;
the processing module is further configured to measure, based on the first measurement result, a reference signal corresponding to the second TCI state, to obtain a second measurement result; and
the processing module is further configured to activate the second TCI state based on the second measurement result.

In some optional implementations of this application, the first TCI state further includes a fourth TCI state, and a quasi-colocation QCL type of the fourth TCI state is type C and/or type D.

In some optional implementations of this application, the processing module is further configured to determine QCL information of the fourth TCI state based on the first indication information, where the QCL information of the fourth TCI state indicates that a source reference signal of the fourth TCI state includes an SSB;
the processing module is further configured to determine the first SSB based on the QCL information of the fourth TCI state, where the QCL information of the fourth TCI state includes the index information of the first SSB; and
the processing module is further configured to measure the first SSB to obtain the first measurement result.

In some optional implementations of this application, the transceiver module is further configured to receive configuration information, where the configuration information includes QCL information of the TCI state of the candidate cell and/or related information of the CSI-RS of the candidate cell.

In some optional implementations of this application, the processing module is further configured to determine, as a default beam based on the first measurement result, a TCI corresponding to the first SSB, where the default beam is used for signal transmission with a serving cell after handover, and the serving cell after handover is the candidate cell.

In some optional implementations of this application, a TCI corresponding to a reference signal in the first TCI state is not allowed to be indicated by the handover command, or a TCI corresponding to a reference signal in the first TCI state is not allowed to be used for data transmission after the handover command is received.

According to a sixth aspect, an embodiment of this application provides a communication apparatus, including:
a transceiver module, configured for a terminal device to receive a handover command, where the handover command instructs the terminal device to be handed over from a serving cell to a candidate cell; and
a processing module, configured to determine a default beam when any one or more of first conditions are satisfied, where the default beam is used for signal transmission with a serving cell after handover, and the serving cell after handover is the candidate cell, where
the first condition includes: the handover command does not indicate a transmission configuration indicator TCI, and the terminal device determines a TA based on a measurement result of a downlink reference signal; or
the handover command does not indicate a timing advance TA, and the terminal device determines the TA based on a measurement result of a downlink reference signal; or
the handover command indicates a TA, and the terminal device determines that a TA of the candidate cell is the same as a TA of the serving cell; or
the handover command indicates a TA, and the terminal device determines that a TA of the candidate cell is 0; or
a TCI indicated in the handover command is not activated in advance; or
a source reference signal of a TCI indicated in the handover command includes a channel state information reference signal CSI-RS, and the terminal device does not measure the CSI-RS before receiving the handover command; or
the handover command indicates a TCI, the terminal device feeds back a hybrid automatic repeat request acknowledgment HARQ-ACK based on the handover command, and a moment at which the HARQ-ACK is fed back does not reach a beam effective time point.

In some optional implementations of this application, that the processing module is further configured to determine the default beam when one or more of the following first conditions are satisfied includes:

The first condition includes: The handover command does not indicate the transmission configuration indicator TCI, and the terminal device determines the TA based on the measurement result of the downlink reference signal; or the handover command does not indicate the timing advance TA, and the terminal device determines the TA based on the measurement result of the downlink reference signal.

That the processing module is configured to determine the default beam includes: The processing module is further configured to determine a second synchronization signal block SSB as the default beam, where the second SSB is an SSB of the candidate cell, and the second SSB is used for measuring the TA of the candidate cell, or the second SSB and a reference signal for measuring the TA of the candidate cell have a quasi-colocation QCL relationship.

In some optional implementations of this application, that the processing module is further configured to determine the default beam when one or more of the following first conditions are satisfied includes:

The first condition includes: The handover command indicates the TA, and the terminal device determines that the TA of the candidate cell is the same as the TA of the serving cell; or the handover command indicates the TA, and the terminal device determines that the TA of the candidate cell is 0.

That the processing module is configured to determine the default beam includes:

The processing module is further configured to determine, based on the handover command, a fifth TCI state indicated by the handover command; and
the processing module is further configured to determine a first reference signal as the default beam, or configured for the terminal device to determine, as the default beam, a synchronization signal block SSB associated with a first reference signal, where the first reference signal is a reference signal indicated by quasi-colocation QCL information of the fifth TCI state.

In some optional implementations of this application, a type of the QCL information of the third TCI state is type D; and
the first reference signal is a channel state information reference signal CSI-RS.

In some optional implementations of this application, that the processing module is further configured for the terminal device to determine the default beam when one or more of the following first conditions are satisfied includes:

The first condition includes: The handover command indicates the TA, and the terminal device determines that the TA of the candidate cell is the same as the TA of the serving cell; or the handover command indicates the TA, and the terminal device determines that the TA of the candidate cell is 0.

That the processing module is further configured to determine the default beam includes:

The processing module is further configured to determine, from synchronization signal blocks SSBs that are of the candidate cell and that are reported by the terminal device to a network device, an SSB having a highest reference signal received power; and
the processing module is further configured to determine, as the default beam, the SSB having the highest reference signal received power.

In some optional implementations of this application, the first condition further includes: The serving cell includes one primary cell and at least one secondary cell, or the candidate cell includes one primary cell and at least one secondary cell, and the primary cell and the secondary cell belong to a same timing advance group TAG.

That the processing module is further configured to determine the default beam includes:

The processing module is further configured to determine, as the default beam, a synchronization signal block SSB for measuring a TA of the primary cell.

In some optional implementations of this application, the default beam is used by the primary cell for signal transmission, and the default beam is further used by the secondary cell for signal transmission; and
the primary cell and the secondary cell are configured in a first set, and the first set is used for configuring a plurality of cells to update a beam based on at least one beam indication.

A seventh aspect of this application provides a communication apparatus. The communication apparatus includes a processor, a memory, an input/output device, and a bus. The memory stores computer instructions. When the processor executes the computer instructions in the memory, the memory stores the computer instructions. When executing the computer instructions in the memory, the processor is configured to implement any one of the implementations of the first aspect, the second aspect, or the third aspect.

In a possible implementation of the seventh aspect, the processor, the memory, and the input/output device are connected to the bus separately.

An eighth aspect of this application provides a computer program product including instructions. When the computer program product runs on a computer, the computer is caused to perform any one of the implementations of the first aspect, the second aspect, or the third aspect.

A ninth aspect of this application provides a computer-readable storage medium, including instructions. When the instructions are run on a computer, the computer is caused to perform the implementations of any one of the first aspect, the second aspect, or the third aspect.

A tenth aspect of this application provides a chip system. The chip system includes a processor, and the processor is configured to execute a computer program or instructions stored in a memory, to cause the processor to perform the implementations of any one of the first aspect, the second aspect, or the third aspect.

In a possible design of the tenth aspect, the chip system further includes the memory, and the memory is configured to store a computer program or instructions necessary for a computer device. The processor is configured to invoke the computer program or the instructions from the memory and run the computer programs or the instructions. The chip system may include a chip, or may include a chip and another discrete component.

In a possible design of the tenth aspect, the chip system further includes an input port and an output port. The input port and the output port are configured to perform a receiving function and a sending function of the terminal device in any one of the implementations of the first aspect, the second aspect, or the third aspect. The receiving function corresponds to the input port, and the sending function corresponds to the output port.

An eleventh aspect of this application provides a communication system. The communication system includes the terminal device according to the first aspect, the terminal device according to the second aspect, or the terminal device according to the third aspect.

### BRIEF DESCRIPTION OF DRAWINGS

FIG. 1 is a diagram of an application scenario according to an embodiment of this application;
FIG. 2 is a diagram of a scenario in which a terminal device is handed over from a serving cell to a candidate cell;
FIG. 3 is a schematic flowchart of a terminal device being handed over from a serving cell to a candidate cell;
FIG. 4 is a schematic flowchart of an embodiment of a beam-based communication method according to an embodiment of this application;
FIG. 5 is a schematic flowchart of another embodiment of a beam-based communication method according to an embodiment of this application;
FIG. 6 is a diagram of a communication apparatus according to an embodiment of this application;
FIG. 7 is another diagram of a communication apparatus according to an embodiment of this application;
FIG. 8 is another diagram of a communication apparatus according to an embodiment of this application; and
FIG. 9 is another diagram of a communication apparatus according to an embodiment of this application.

### DESCRIPTION OF EMBODIMENTS

In the specification, claims, and accompanying drawings of this application, terms such as "first" and "second" are intended to distinguish between similar objects, but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have" and any other variants mean to cover the non-exclusive inclusion, so that a process, a method, a system, a product, or a device that includes a series of units is not necessarily limited to those units, but may include other units not expressly listed or inherent to such a process, method, product, or device.

The following clearly describes the technical solutions in embodiments of this application with reference to the accompanying drawings in embodiments of this application. In descriptions of this application, "/" means "or" unless otherwise specified. For example, A/B may indicate A or B. In this application, "and/or" describes only an association relationship for describing associated objects and indicates that three relationships may exist. For example, A and/or B may indicate the following three cases: Only A exists, both A and B exist, and only B exists. In addition, in the descriptions of this application, "at least one item" means one or more items, and "a plurality of items" means two or more items. "At least one of the following items (pieces)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, or c may be in a singular form or a plural form.

The technical solutions in embodiments of this application may be applied to various communication systems, for example, a long term evolution (Long Term Evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or NR, and a future 6th generation communication system. For another example, the technical solutions in embodiments of this application may be further applied to an open access network (open radio access network, open RAN, O-RAN, or ORAN), a cloud radio access network (cloud radio access network, CRAN), or a wireless fidelity (wireless fidelity, Wi-Fi) system. The technical solutions in embodiments of this application may be further applied to a communication system that integrates two or more of the foregoing systems.

In the communication systems, a communication system operated by an operator may be referred to as an operator network. The operator network may also be referred to as a PLMN network, is a network established and operated by a government or an operator approved by the government to provide a land mobile communication service for the public, and is mainly a public network in which a mobile network operator (mobile network operator, MNO) provides a mobile broadband access service for a user. The operator network or the PLMN network described in embodiments of this application may be a network compliant with a requirement of a 3rd generation partnership project (3rd generation partnership project, 3GPP) standard, which is referred to as a 3GPP network for short. Generally, the 3GPP network is operated by an operator, and includes but is not limited to a 5th generation (5th generation, 5G) mobile communication network (referred to as a 5G network for short), a 4th generation (4th generation, 4G) mobile communication network (referred to as a 4G network for short), or a 3rd generation (3rd generation, 3G) mobile communication technology network (referred to as a 3G network for short). The 3GPP network further includes a future 6G network. For ease of description, an operator network (for example, a mobile network operator (mobile network operator, MNO) network) is used as an example for description in embodiments of this application.

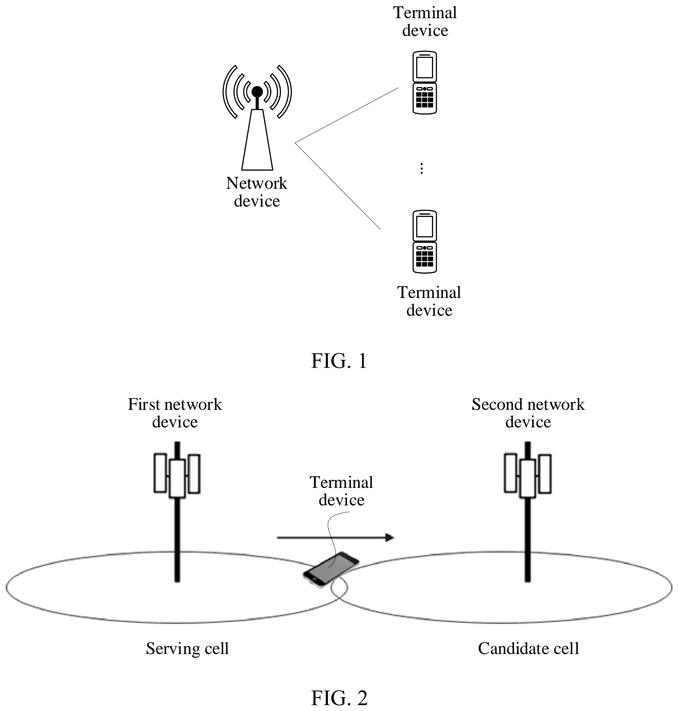

For ease of understanding embodiments of this application, some application scenarios of this solution are described. FIG. 1 is a diagram of an application scenario according to an embodiment of this application. In an optional implementation, a transmit end in embodiments of this application may be a network device, and a receive end may be a terminal device. In another optional implementation, a transmit end in embodiments of this application may be a terminal device, and a receive end may be a network device.

In embodiments of this application, the terminal device may also be referred to as user equipment (user equipment, UE). As a device having a wireless transceiver function, the terminal device in embodiments of this application may communicate with one or more core networks (core networks, CNs) via an access network device in the network device. The terminal device may also be referred to as an access terminal, a terminal, a subscriber unit, a subscriber station, a mobile station, a mobile, a remote station, a remote terminal, a mobile device, a user terminal, a wireless network device, a user agent, a user apparatus, or the like. The terminal device may be deployed on land, including an indoor device, an outdoor device, a handheld device, or a vehicle-mounted device; may be deployed on a water surface (for example, on a ship); or may be deployed in the air (for example, on an aircraft, a balloon, or a satellite). The terminal device may be a cellular phone (cellular phone), a cordless phone, a session initiation protocol (session initiation protocol, SIP) phone, a smartphone (smartphone), a mobile phone (mobile phone), a wireless local loop (wireless local loop, WLL) station, a personal digital assistant (personal digital assistant, PDA), a handheld device having a wireless communication function, a computing device or another device connected to a wireless modem, a vehicle-mounted device, a wearable device, an uncrewed aerial vehicle device, a terminal in an internet of things or an internet of vehicles, a terminal in any form in a 5th generation (5th generation, 5G) network and a future network, relay user equipment, a terminal in a future evolved public land mobile network (public land mobile network, PLMN), or the like. The relay user equipment may be, for example, a 5G residential gateway (residential gateway, RG). For example, the terminal device may be a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. This is not limited in embodiments of this application. The terminal device may be widely used in various scenarios, for example, virtual reality, augmented reality, industrial control, self driving, telemedicine, smart grid, smart furniture, smart office, smart wearable, smart transportation, and smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal device is not limited in embodiments of this application.

A network device may be considered as a subnet of an operator network, and is an implementation system between a service node and a terminal device in the operator network. To access the operator network, the terminal device first accesses the network device, and then may be connected to the service node of the operator network via the network device. The network device in embodiments of this application is a device that provides a wireless communication function for the terminal device, and may also be referred to as an access network (access network, AN) node or a radio access network (radio access network, RAN) node.

The RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation NodeB in a 6th generation (6th generation, 6G) mobile communication system, a base station in a future mobile communication system, an access point in a Wi-Fi system, or the like. The RAN node may be a macro base station, a micro base station or an indoor base station, a relay node or a donor node, or a radio controller in a CRAN scenario. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU).

In another possible scenario, a plurality of RAN nodes coordinate to assist the terminal in implementing radio access, and different RAN nodes respectively implement some functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

A beam-based communication method provided in this application may be applied to various communication systems, which, for example, may be an internet of things (internet of things, IoT), a narrowband internet of things (narrowband internet of things, NB-IoT), long term evolution (long term evolution, LTE), or may be a 5th generation (5G) communication system, or may be an LTE and 5G hybrid architecture, a 5G new radio (new radio, NR) system, and a new communication system emerging in future communication development. The 5G communication system in this application may include at least one of a non-standalone (non-standalone, NSA) 5G communication system and a standalone (standalone, SA) 5G communication system. Alternatively, the communication system may be a public land mobile network (public land mobile network, PLMN), a device-to-device (device-to-device, D2D) network, a machine-to-machine (machine-to-machine, M2M) network, or another network.

In addition, embodiments of this application are further applicable to another future-oriented communication technology, for example, 6G. Network architectures and service scenarios described in this application are intended to describe the technical solutions in this application clearly, and do not constitute a limitation on the technical solutions provided in this application. A person of ordinary skill in the art may know that, with evolution of the network architectures and emergence of new service scenarios, the technical solutions provided in this application are also applicable to similar technical problems.

The following describes some technical concepts in embodiments of this application.
1. Beam (beam): The beam is a communication resource. The beam may be a wide beam, a narrow beam, or another type of beam, and a technology for forming the beam may be a beamforming technology or another technical means. The beamforming technology may be specifically a digital beamforming technology, an analog beamforming technology, and a hybrid digital/analog beamforming technology. Different beams may be considered as different resources.

In an NR protocol, the beam may be referred to as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-colocation (quasi-colocation, QCL) information, a QCL assumption, a QCL indication, or the like. The beam may be indicated by using a TCI-state parameter, or may be indicated by using a spatial relation (spatial relation) parameter. Therefore, in this application, the beam may be replaced with the spatial domain filter, the spatial filter, the spatial domain parameter, the spatial parameter, the spatial domain setting, the spatial setting, the QCL information, the QCL assumption, the QCL indication, a TCI-state (including an uplink TCI-state or a downlink TCI-state), a spatial relation, or the like. The foregoing terms are equivalent to each other. Alternatively, the beam may be replaced with another term representing the beam. This is not limited in this application.

A transmit end may send same information or different information by using different beams. Optionally, a plurality of beams having a same or similar communication feature may be considered as one beam. One beam may include one or more antenna ports, configured to transmit a data channel, a control channel, a sounding signal, and the like. An uplink transmission beam may be indicated by any one of the spatial relation, the TCI-state, or a sounding reference signal (Sounding reference signal, SRS) resource (representing a transmission beam using an SRS). Therefore, the uplink transmission beam may alternatively be replaced with the SRS resource.

A beam for sending a signal may be referred to as a transmission beam (transmission beam, Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting).

A beam for receiving a signal may be referred to as a reception beam (reception beam, Rx beam), a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting).

For example, the transmission beam may be signal strength distribution formed in different directions in space after a signal is transmitted through an antenna, and the reception beam may be signal strength distribution, in different directions in space, of a radio signal received from an antenna. It may be understood that one or more antenna ports forming one beam may also be considered as one antenna port set.

When a low-frequency band or an intermediate-frequency band is used, the transmit end may send a signal in an omnidirectional manner or at a wide angle. When a high-frequency band is used, because of a small carrier wavelength in a high-frequency communication system, an antenna array including many antenna elements may be disposed at the transmit end and a receive end. The transmit end sends a signal by using a specific beamforming weight, so that the sent signal forms a spatially directional beam, and the receive end receives the signal by using the antenna array by using a specific beamforming weight. This helps increase a received power of the signal at the receive end and resist a path loss.

2. Quasi-co-location (quasi-co-location, QCL): A quasi-co-location relationship indicates that a plurality of resources have one or more same or similar communication features. A same communication configuration or similar communication configurations may be used for the plurality of resources in the quasi-co-location relationship. For example, if two antenna ports have a quasi-co-location relationship, a large-scale channel property of transmitting one symbol by one port may be deduced from a large-scale channel property of transmitting one symbol by the other port. The large-scale property may include a delay spread, an average delay, a Doppler spread, a Doppler frequency shift, an average gain, a reception parameter, a reception beam number of a terminal device, a transmit/receive channel correlation, an angle of arrival, a spatial correlation of a receiver antenna, a dominant angle of arrival (Angle of Arrival, AoA), an average angle of arrival, an AoA spread, and the like. Specifically, that a co-location indication indicates whether at least two groups of antenna ports have a co-location relationship includes: The co-location indication indicates whether channel state information reference signals sent by the at least two groups of antenna ports are from a same transmission point, or the co-location indication indicates whether channel state information reference signals sent by the at least two groups of antenna ports are from a same beam group.

3. Reference signal (reference signal): Based on a long term evolution LTE/NR protocol, at a physical layer, uplink communication includes transmission of an uplink physical channel and an uplink signal. The uplink physical channel includes a random access channel (random access channel, PRACH), an uplink control channel (physical uplink control channel, PUCCH), an uplink data channel (physical uplink shared channel, PUSCH), and the like. The uplink signal includes a channel sounding signal SRS, an uplink control channel demodulation reference signal (PUCCH demodulation reference signal, PUCCH-DMRS), an uplink data channel demodulation reference signal PUSCH-DMRS, an uplink phase noise tracking signal (phase noise tracking reference signal, PTRS), an uplink positioning signal (uplink positioning RS), and the like. Downlink communication includes transmission of a downlink physical channel and a downlink signal. The downlink physical channel includes a broadcast channel (physical broadcast channel, PBCH), a downlink control channel (physical downlink control channel, PDCCH), a downlink data channel (physical downlink shared channel, PDSCH), and the like. The downlink signal includes a primary synchronization signal (primary synchronization signal, PSS for short)/secondary synchronization signal (secondary synchronization signal, SSS), a downlink control channel demodulation reference signal PDCCH-DMRS, a downlink data channel demodulation reference signal PDSCH-DMRS, a phase noise tracking signal PTRS, a channel state information reference signal (channel state information reference signal, CSI-RS), a cell signal (Cell reference signal, CRS) (not in NR), a tracking reference signal (tracking reference signal, TRS), and an LTE/NR positioning signal (positioning RS).

For the TRS, it may be considered that the TRS is a CSI-RS resource set (resource set), and the TRS is a CSI-RS resource set including one or more CSI-RS resources.

4. Transmission configuration indicator (Transmission Configuration Indicator, TCI): The transmission configuration indicator may also be referred to as a TCI-state (TCI-State). A communication protocol specifies that QCL is configured by using a TCI state. A parameter of the TCI state is used for configuring a quasi-colocation relationship between one or two downlink reference signals and a demodulation reference signal (demodulation reference signal, DMRS) of a PDSCH. Downlink control information (Downlink Control Information, DCI) may include a TCI field, and the TCI field is a field that is in the DCI and that indicates quasi-colocation of a PDSCH antenna port. In a current 3GPP standard, the TCI state commonly indicates a beam.

The TCI is configured by the network device for the terminal device by using an RRC message, and is referred to as a TCI state in configuration signaling. After the network device configures the TCI state for the terminal device by using the RRC message, the network device may send a media access control control element (MAC CE) to the terminal device, where the MAC is used for activating one or more of TCI states configured by the network device for the terminal device. Optionally, the network device may further send DCI to the terminal device. The DCI indicates one TCI state in the TCI states activated by the MAC CE.

The TCI state includes one or two QCL relationships. The QCL relationship represents a consistency relationship between a signal/channel to be received currently and a previously known reference signal. If there is a QCL relationship, the terminal device may inherit a receiving or sending parameter used when a reference signal is previously received, to receive or send an upcoming signal/channel. Each TCI state corresponds to one beam. The terminal device may perform communication and transmission by using the beam.

The following describes configuration, activation, and indication of the TCI state.

TCI state configuration: The network device configures a plurality of TCI states for the terminal device by using radio resource control (Radio Resource Controller, RRC) signaling. Each of these TCI states includes one piece of QCL-Info whose type is type D. Alternatively, the network device may configure a TCI-state that does not include the QCL-Info whose type is type D. However, the TCI-states do not indicate a data transmission beam. Therefore, details are not further described herein.

TCI state activation: After configuring the plurality of TCI states, the network device further needs to activate up to eight TCI states in the TCI states by using the MAC CE. Eight TCI states are used as an example. The eight TCI states are in one-to-one correspondence with eight values of the TCI field in the DCI. In other words, specific eight TCI states corresponding to the eight values of the TCI field in the DCI are determined by using the media access control control element (MAC CE).

TCI state indication: The network device indicates a specific TCI-state by using the TCI field in the DCI. For example, a value of the TCI field in the DCI sent by the network device to the terminal device is 000, representing that a TCI state corresponding to 000 is used for a data transmission beam. A reference signal included in QCL-Info of type D in the TCI state is a channel state information reference signal (channel state information reference signal, CSI-RS) whose index is #1, which indicates that a beam for data transmission is the same as a reception beam corresponding to the CSI-RS whose index is #1. The reception beam corresponding to the CSI-RS whose index is #1 may be determined through a beam measurement procedure, and is known to the terminal device. Therefore, the terminal device may determine, based on a specific value of the TCI field, a beam corresponding to the data transmission beam, to send or receive data by using the corresponding beam.

It should be noted that the two description manners of the TCI-state and the TCI state in this specification may be interchanged.

QCL types of the TCI include QCL type A (QCL-type A, or type A, or typeA), where a characteristic of QCL type A includes a Doppler shift, a Doppler spread, an average delay, a delay spread, and the like, and QCL type A is used for obtaining channel estimation information;
QCL type B (QCL-Type B, or Type B, or typeB), where a characteristic of QCL type B includes a Doppler shift, a Doppler spread, and the like, and QCL type B is used for obtaining the channel estimation information;
QCL type C (QCL-Type C, Type C, or typeC), where a characteristic of QCL type C includes an average delay, a delay spread, and the like, and QCL type C is used for obtaining measurement information such as a reference signal received power (reference signal received power, RSRP); and
QCL type D (QCL-Type D, Type D, or typeD), where a characteristic of QCL type D includes a spatial reception (Rx) parameter and the like, and QCL type D is used for assisting UE in beamforming.

QCL information (which may also be referred to as a QCL configuration or QCL configuration information, and is not limited in this application) of the TCI state is specifically indicated by a TCI-state information element (TCI-State information element). The "TCI-State information element" may indicate a maximum of two pieces of QCL information (QCL-Info), for example, "qcl-Type1 QCL-Info, qcl-Type2 QCL-Info". The QCL information further includes configuration information of a reference signal (where the configuration information of the reference signal may also be referred to as related information of the reference signal, and this is not limited in this application) and a type configuration of the QCL information (qcl-Type). The configuration information of the reference signal is, for example, "referenceSignal CHOICE {csi-rs NZP-CSI-RS-ResourceId, ssb SSB-Index} ", and the type configuration of the QCL information is, for example, " qcl-Type ENUMERATED {typeA, typeB, typeC, typeD}".

For the configuration information of the reference signal in the QCL information, the following uses configuration information of a TRS as an example for description. The TRS is a special CSI-RS resource set, and the configuration information of the TRS may also be understood as configuration information of the CSI-RS resource set, for example, "NZP-CSI-RS-ResourceSet information element". The "NZP-CSI-RS-ResourceSet" includes TRS information (trs-info), and the TRS information is set to "true".

The configuration information of the TRS may include configuration information of a plurality of CSI-RS resources (which may also be referred to as configuration information of CSI-RSs), for example, "NZP-CSI-RS-Resource information element". The configuration information of the CSI-RS may further include index information of the TCI state (or an identifier of the TCI-state) "TCI-StateId". For example, the configuration information of the CSI-RS "NZP-CSI-RS-Resource information element" includes "qcl-InfoPeriodicCSI-RS TCI-StateId". In other words, the QCL information of the TCI state indicates that there is an association relationship between the TCI state and a reference signal, and the reference signal is used as a source reference signal (source RS) of the TCI state. The configuration information of the reference signal may record a TCI state corresponding to the reference signal.

5. Common beam: Currently, each channel is indicated by using an independent beam. Each channel has a corresponding beam. In this application, a common beam is defined for a plurality of uplink and/or downlink channels.

The common beam is a same beam used by one or more channels, one or more types of channels, one or more reference signals, and/or one or more types of reference signals. The channel includes but is not limited to at least one of a PDCCH, a PDSCH, a PUCCH, a PUSCH, and a PRACH. The reference signal includes but is not limited to at least one of a synchronization signal block (synchronization signal block, SSB or SS/PBCH), a CSI-RS, a DMRS, a PTRS, a TRS, an SRS, and the like. The CSI-RS may be a CSI-RS configured for beam management (beam management), or may be a CSI-RS configured for channel state information acquisition (for CSI).

Joint (joint) common beam: The joint common beam is for both transmission of at least one uplink channel or at least one uplink reference signal and transmission of at least one downlink channel or at least one downlink reference signal, for example, a PDCCH, a PDSCH, a PUCCH, and a PUSCH. The joint common beam may also be referred to as an uplink and downlink common beam.

Uplink common beam: The uplink common beam is for transmission of a plurality of uplink channels, and/or transmission of a plurality of types of uplink channels, and/or transmission of one or more uplink reference signals, for example, a PUCCH, a PUSCH, and an SRS.

Downlink common beam: The downlink common beam is for transmission of a plurality of downlink channels, and/or transmission of a plurality of types of downlink channels, and/or transmission of one or more downlink reference signals, for example, a PDCCH, a PDSCH, and a CSI-RS.

Form of the common beam: The common beam may be of a newly defined structure (different from an existing TCI-state). For example, the common beam includes beam indication related information, including but not limited to one or more of the following: a common beam identifier (identifier, ID), a logical cell identifier (cell ID), a physical cell identifier, a bandwidth part identifier, a reference signal resource for determining a beam, a QCL type, an uplink power control related parameter (for example, a path loss measurement reference signal resource, p0, and a closed loop index (closedLoopIndex)), and an identifier of a path loss reference signal.

Application scope of the common beam: The common beam may be cell-specific, that is, one common beam is for transmission of a plurality of channels in one cell. The common beam may be bandwidth part (Bandwidth part, BWP)-specific, and is used for transmission of a plurality of beams in one BWP. The common beam may alternatively be cross-cell, that is, used for transmission of a plurality of channels of a plurality of cells. The plurality of cells may be a plurality of cells in one band (band). The plurality of cells may alternatively be a plurality of interband cells.

For example, the common beam may also be referred to as a unified transmission configuration indicator (unified transmission configuration indicator, UTCI).

FIG. 2 is a diagram of a scenario in which a terminal device is handed over from a serving cell to a candidate cell. It may be understood that, in this scenario, a plurality of network devices and a plurality of terminal devices may be further included. An example in which a terminal device is handed over from a serving cell to a candidate cell is used for description. The candidate cell may also be referred to as a neighboring cell (or an adjacent cell), and the candidate cell may be understood as another cell near the serving cell. After the terminal device moves from the serving cell to a cell edge, as signal quality of the serving cell deteriorates, the terminal device needs to be handed over from the serving cell to the candidate cell. In other words, provision of a communication service is switched from the serving cell to the candidate cell. It should be noted that, there may be a plurality of carrier components (carrier components, CCs) configured in each cell, and the carrier may also be referred to as a serving cell (serving cell).

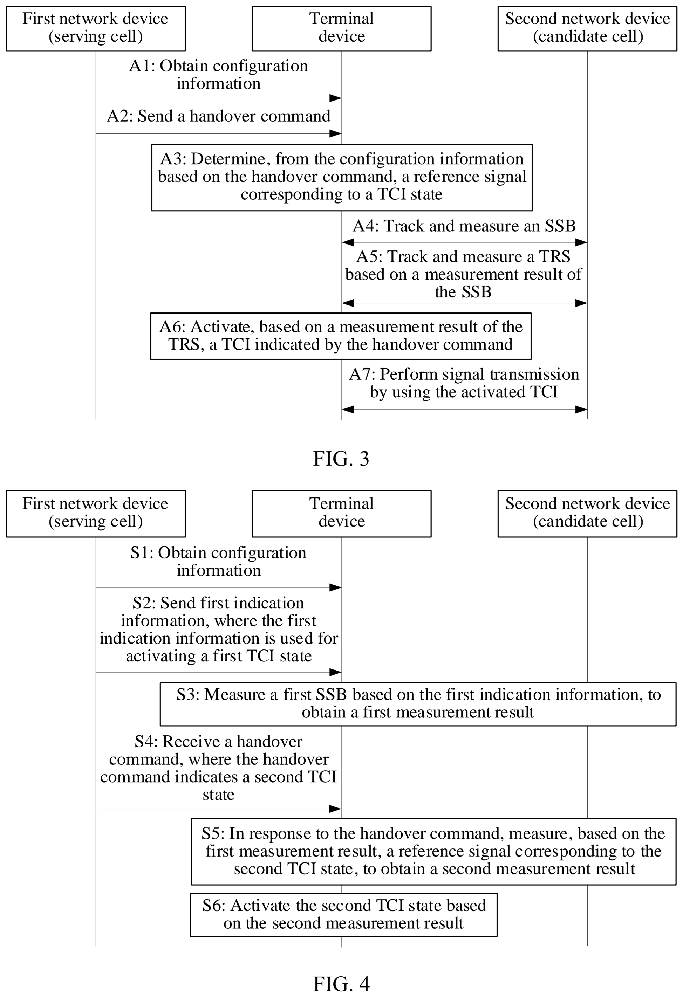

FIG. 2 is used as an example. The following describes a specific procedure of a terminal device being handed over from a serving cell to a candidate cell. FIG. 3 is a schematic flowchart of a terminal device being handed over from a serving cell to a candidate cell. The following steps are specifically included.

A1: The terminal device obtains configuration information. The configuration information includes configuration information of a TCI state and configuration information of a related reference signal. The configuration information is from a first network device, and the first network device is a network device in the serving cell. Because a plurality of candidate cells may be configured for the terminal device, before a target candidate cell to which the terminal device is to be handed over is determined, the terminal device parsing configurations of all candidate cells causes huge calculation burden. Therefore, after receiving the configuration information, the terminal device may cache the configuration information without parsing the configuration information, and parse the configuration information after receiving a handover command in step A2.

The configuration information may be carried in an RRC message.

A2: The first network device sends the handover command to the terminal device. The handover command indicates the TCI state, and the terminal device determines, based on the TCI state indicated by the handover command, a common beam that is switched to. The handover command may be carried in a MAC CE message.

A3: The terminal device determines, from the configuration information based on the handover command, a reference signal (CSI-RS/TRS) corresponding to the TCI state. In step A3, after receiving the handover command, the terminal device parses the configuration information to obtain QCL information of the TCI state, and then determines an identifier of the reference signal corresponding to the TCI state, for example, an identifier of the TRS or the CSI-RS. Then, the terminal device further determines the reference signal based on the identifier of the reference signal, for example, configuration information corresponding to the TRS or configuration information of the CSI-RS. The terminal device determines, based on the configuration information of the TRS, a TCI corresponding to the TRS. The TCI corresponding to the TRS is beam information for receiving the TRS, the information is configured in the configuration information of the TRS, and the TCI is different from the TCI indicated in the handover command. The TCI state for receiving the TRS includes an SSB index.

A4: The terminal device tracks and measures an SSB. After the terminal device determines the configuration information of the TRS, the terminal device needs to track and measure the TRS. Before measuring the TRS, the terminal device needs to first track and measure an SSB corresponding to the TRS, to determine a beam, and measures the corresponding TRS based on a measurement result of the SSB. Therefore, the terminal device needs to first measure the SSB.

A5: After the terminal device obtains the measurement result of the SSB, the terminal device tracks and measures the TRS based on the measurement result of the SSB.

A6: The terminal device activates, based on a measurement result of the TRS, the TCI indicated by the handover command.

A7: The terminal device and a second network device perform signal transmission by using the activated TCI as the common beam, where the second network device is a network device in the candidate cell.

The terminal device activates the TCI state through the foregoing procedure, where the TCI state is used for signal transmission with the candidate cell, so that the terminal device is handed over from the serving cell to the candidate cell. The applicant finds through research that, the terminal device can parse the configuration information related to the candidate cell only after receiving the handover command, then measure the SSB and the TRS that correspond to the TCI state of the candidate cell, and finally activate the TCI state based on the measurement result. The foregoing process has a long delay, resulting in a long communication pause for the terminal device, and reducing communication quality.

In view of this, an embodiment of this application provides a beam-based communication method. In a scenario in which a terminal device is handed over from a serving cell to a candidate cell, the terminal device may determine, based on received first indication information, a first TCI state that needs to be activated. Then, the terminal device determines a first synchronization signal block SSB based on the first TCI state, and measures the first SSB in advance to obtain a first measurement result. After receiving a handover command, the terminal device measures, based on the first measurement result, a reference signal corresponding to a second TCI state, to obtain a second measurement result; and activates the second TCI state based on the second measurement result, where the activated second TCI state is used for data transmission. An SSB associated with a TCI state is measured in advance by using the first indication information, to quickly activate the TCI state. Therefore, communication interruption time of the terminal device is reduced, and communication quality of the terminal device is improved.

The following describes embodiments of this application with reference to the accompanying drawings. FIG. 4 is a schematic flowchart of an embodiment of a beam-based communication method according to an embodiment of this application. The beam-based communication method provided in this embodiment of this application includes the following steps.

S1: Obtain configuration information.

In step S1, a terminal device obtains the configuration information. The configuration information is configuration information that is of a candidate cell and that is related to a TCI state. For example, the configuration information includes: quasi-colocation QCL information of the TCI state of the candidate cell and/or related information of a CSI-RS of the candidate cell. The related information of the CSI-RS of the candidate cell specifically includes configuration information of the CSI-RS, where the configuration information is used for determining time domain and frequency domain resource configurations of the CSI-RS. The configuration information may further include configuration information of a TRS of the candidate cell, where the configuration information of the TRS includes a TCI state identifier required for receiving the TRS.

The candidate cell is a candidate for a target cell after handover, and there are a plurality of candidate cells. The candidate cell may be a cell geographically adjacent to a current serving cell, or the candidate cell may be another cell. This is not limited in embodiments of this application.

After receiving the configuration information, the terminal device may parse the configuration information in advance. For example, the terminal device parses the configuration information in advance before receiving first indication information in step S2. For another example, after receiving the first indication information in step S2, the terminal device parses the configuration information in response to the first indication information.

The configuration information may be carried in an RRC message (or RRC signaling). The configuration information may alternatively be carried in another message or other signaling. This is not limited in this application.

The configuration information is referred to as first configuration information, and other configuration information of the candidate cell is referred to as second configuration information. The second configuration information includes related configuration information such as an uplink physical channel and a downlink physical channel of the candidate cell. The second configuration information is, for example, cell group configuration information (cellgroupconfig) of the candidate cell. The terminal device uses the second configuration information or parses and uses the second configuration information only after the terminal device receives a handover command for being handed over to the candidate cell.

In a possible implementation, the first configuration information is carried in a first information element, and the second configuration information is carried in a second information element. The RRC message includes the first information element and the second information element. After receiving the RRC message, the terminal device extracts the first information element and the second information element from the RRC message. For the first information element, the terminal device parses the first information element in advance, and brings the first configuration information included in the first information element into effect. For the second information element, after receiving a corresponding handover command, the terminal device parses the second information element, and then brings the second configuration information included in the second information element into effect in response to the handover command.

In another possible implementation, the configuration information related to the TCI state is carried in first sub configuration information, and the other configuration information is carried in second sub configuration information. The first sub configuration information and the second sub configuration information may be sent in a same message, or may be sent in different messages. This is not limited in embodiments of this application.

It should be noted that steps performed by a network device in embodiments of this application may be performed by a base station, or may be performed by any one or more network elements of an O-CU-CP, an O-CU-UP, an O-DU, or an O-RU. This is not limited in embodiments of this application.

S2: A first network device sends the first indication information to the terminal device, where the first indication information is used for activating the TCI state of the candidate cell.

In step S2, the first network device in the serving cell sends the first indication information to the terminal device. The first indication information may also be referred to as TCI activation signaling or TCI activation information. This is not limited in embodiments of this application. The first indication information is used for activating the TCI state of the candidate cell. The activated TCI state of the candidate cell includes a first TCI state, and the first TCI state includes one or more TCI states. In other words, the candidate cell may include configurations of a plurality of TCI states, and the first indication information is used for activating one or more of the plurality of TCI states. The activated TCI state of the candidate cell is referred to as the first TCI state. The first TCI state may also be referred to as a semi-activated TCI state.

In a possible implementation, the first indication information may alternatively be used for deactivating the TCI state of the candidate cell. Specifically, the first indication information may explicitly include an "activation/deactivation" field, and the field may be used for identifying that current first indication information is used for activating or deactivating the TCI state. In other words, activation or deactivation is determined for all TCI state identifiers included in the same first indication information based on the "activation/deactivation" field. For example, one bit is used for indication, where '1' represents activation, and '0' represents deactivation. Alternatively, the field may be used for identifying whether each TCI state in the first indication information is an activated TCI state or a deactivated TCI state. For example, if the first indication information includes identifiers of eight TCI states, the "activation/deactivation" field may include eight bits, where a value '1' of each bit represents activating a corresponding TCI state, and '0' represents deactivating a corresponding TCI state. The "activated/deactivated" field and the TCI state identifiers have a one-to-one correspondence in sequence. For example, a leftmost or rightmost bit in the field corresponds to a 1^{st} TCI state identifier, and so on.

For example, the candidate cells include a cell #1, a cell #2, a cell #3, a cell #4, and a cell #5. In step S2, the first indication information is used for activating a TCI state of the cell #1, a TCI state of the cell #2, a TCI state of the cell #3, a TCI state of the cell #4, and a TCI state of the cell #5. The first indication information may alternatively be used for activating TCI states of some candidate cells, for example, activating the TCI state of the cell #1 and the TCI state of the cell #2. It may be understood that the first indication information may alternatively be used for activating any one or more TCI states in the cell. This is not limited in embodiments of this application.

The first indication information may be carried in a plurality of messages. For example, the first indication information is carried in a media access control control element (media access control control element, MAC CE) message, or the first indication information may be carried in downlink control information (Downlink Control Information, DCI).

In a possible implementation, the first TCI state includes a TCI state of a common beam, and the TCI state of the common beam is also referred to as a UTCI (unified TCI) state. A type of QCL information included in the first TCI state may be type A and/or type D, and a source reference signal (source RS) of the first TCI state includes a TRS or a CSI-RS. Specifically, a reference signal in the QCL information of the first TCI state includes at least one CSI-RS. For example, the QCL information of the first TCI state includes a first CSI-RS and/or a second CSI-RS. For another example, the QCL information of the first TCI state includes a first TRS. The at least one CSI-RS is a CSI-RS of the candidate cell. For example, the first CSI-RS and/or the second CSI-RS are/is CSI-RSs/a CSI-RS of the candidate cell.

For example, the first TCI state includes a TCI state #1, a TCI state #2, a TCI state #3, a TCI state #4, and a TCI state #5.

In a possible example, a type of QCL information of the TCI state #1 is type A and type D, a type of QCL information of the TCI state #2 is type A and type D, a type of QCL information of the TCI state #3 is type A and type D, a type of QCL information of the TCI state #4 is type A and type D, and a type of QCL information of the TCI state #5 is type A and type D.

In another possible implementation, the first TCI state further includes a fourth TCI state, and a type of QCL information of the fourth TCI state is type C and/or type D. A source reference signal of the fourth TCI state includes a synchronization signal block (synchronization signal block, SSB or SS/PBCH).

In another possible implementation, the first TCI state further includes a TCI state whose QCL information is of type B and/or type C. The type of the QCL information of the first TCI state is not limited in embodiments of this application.

It may be understood that, in this embodiment of this application, "a type of QCL information of a TCI state" may also be represented as "a type of QCL information in a TCI state configuration". This is not limited in this application.

S3: Measure a first SSB based on the first indication information, to obtain a first measurement result.

In step S3, after the first TCI state is determined based on the first indication information, the first SSB is further measured to obtain the first measurement result.

Specifically, the first SSB and the at least one CSI-RS in the QCL information of the first TCI state have a QCL relationship. The first SSB is an SSB of the candidate cell, and the CSI-RS is a CSI-RS resource of the candidate cell. It may be understood that when the first TCI state includes a plurality of TCI states, the first SSB refers to a plurality of SSBs.

The following separately describes how to determine the first SSB based on the type of the QCL information of the first TCI state.

In a possible implementation, when the type of the QCL information of the first TCI state is type A and/or type D, the at least one CSI-RS corresponding to the first TCI state is determined based on the QCL information of the first TCI state. Then, the terminal device determines, based on configuration information of the at least one CSI-RS, a TCI state corresponding to the CSI-RS. For ease of description, the TCI state is referred to as a third TCI state. The configuration information of the CSI-RS may be the configuration information obtained by the terminal device in step S1. The configuration information of the at least one CSI-RS includes identification information of the third TCI state, and the third TCI state is used for determining a reception parameter for receiving a reference signal corresponding to the first TCI state. The reception parameter includes but is not limited to a time offset compensation, a frequency offset compensation, a reception beam, and/or the like. Because QCL information of the third TCI state includes index information of the first SSB, the terminal device determines the first SSB based on the index information of the first SSB in the QCL information in the third TCI state. A QCL type of the third TCI state is type C and/or type D.

In another possible implementation, when the first TCI state further includes the fourth TCI state, QCL information of the fourth TCI state is determined based on the first indication information. Then, the first SSB is determined based on the QCL information in the fourth TCI state, where the QCL information of the fourth TCI state includes the index information of the first SSB.

After the terminal device determines the first SSB, the terminal device measures the first SSB to obtain the first measurement result. Details are as follows:

The terminal device measures a clock offset compensation, and/or a frequency domain offset compensation, and/or a reception beam determined by the first SSB. The reception beam may be a spatial filter used by the terminal device to receive the first SSB, or a receive spatial filter parameter (Rx spatial filter parameter), used for receiving another signal.

For example, when the first SSB includes a plurality of SSBs, the terminal device measures a plurality of first measurement results corresponding to the plurality of SSBs. Then, the terminal device stores the plurality of first measurement results after establishing association relationships between the plurality of first measurement results and corresponding first TCI states. An example is shown in Table 1.

**Table 1**

| TCI state | SSB | First measurement result |
|---|---|---|
| TCI state #1 | SSB #1 | First measurement result #1 |
| TCI state #2 | SSB #2 | First measurement result #2 |
| TCI state #3 | SSB #3 | First measurement result #3 |
| TCI state #4 | SSB #4 | First measurement result #4 |

S4: Receive the handover command, where the handover command indicates a second TCI state.

In step S4, after step S3, the terminal device receives the handover command sent by the first network device, where the handover command instructs the terminal device to be handed over from the serving cell to the candidate cell.

For example, if the first indication information in step S2 is used for activating TCI states of a plurality of candidate cells, the handover command in step S4 instructs the terminal device to be handed over from the serving cell to one target cell in the plurality of candidate cells. For example, the candidate cells include a cell #1, a cell #2, a cell #3, a cell #4, and a cell #5. In step S2, the first indication information is used for activating a TCI state of the cell #1, a TCI state of the cell #2, a TCI state of the cell #3, a TCI state of the cell #4, and a TCI state of the cell #5. In step S4, the handover command instructs the terminal device to be handed over from the serving cell to the cell #2, and the cell #2 is used as the target cell. The second TCI state indicated by the handover command belongs to the cell #2.

The handover command further indicates the second TCI state, where the second TCI state belongs to the first TCI state. For example, the first TCI state includes a TCI state #1, a TCI state #2, a TCI state #3, a TCI state #4, and a TCI state #5. The second TCI state is the TCI state #3.

For example, for a type of QCL information of the second TCI state, the second TCI state may be a TCI state of type A and/or type D, and a source reference signal of the second TCI state includes a CSI-RS or a TRS.

For example, the handover command is carried in a media access control control element MAC CE message.

S5: In response to the handover command, measure, based on the first measurement result, a reference signal corresponding to the second TCI state, to obtain a second measurement result.

In step S5, in response to the handover command, the first measurement result corresponding to the second TCI state is determined based on the second TCI state indicated by the handover command. Then, measuring, based on the first measurement result (corresponding to the second TCI state), the reference signal corresponding to the second TCI state, to obtain the second measurement result is specifically:
receiving, based on the clock offset compensation, and/or the frequency domain offset compensation, and/or the reception beam that are/is determined by measuring the first SSB, the reference signal corresponding to the second TCI state, where the reference signal may be a TRS signal or a CSI-RS signal.

Optionally, before step S5, the terminal device determines, as a default beam based on the first measurement result, a TCI corresponding to the first SSB, where the default beam is used for signal transmission with a serving cell after handover, and the serving cell after handover is the candidate cell. Signal transmission is performed by using the default beam, to reduce communication time of the terminal device, and improve communication quality of the terminal device.

Optionally, a TCI corresponding to a reference signal in the first TCI state is not allowed to be indicated by the handover command, or a TCI corresponding to a reference signal in the first TCI state is not allowed to be used for data transmission after the handover command is received. That the TCI corresponding to the reference signal in the first TCI state is not allowed to be indicated by the handover command may also be understood as follows: A TCI indicated by the handover command does not include the TCI corresponding to the reference signal in the first TCI state, and a TCI activated by the handover command is used for data transmission. The reference signal includes but is not limited to a TRS or a CSI-RS.

S6: Activate the second TCI state based on the second measurement result.

In step S6, after obtaining the second measurement result through measurement, the terminal device activates the second TCI state based on the second measurement result. The activated second TCI state is used for signal transmission with the serving cell after handover.

In this embodiment of this application, in a scenario in which the terminal device is handed over from the serving cell to the candidate cell, the terminal device may determine, based on the received first indication information, the first TCI state that needs to be activated. Then, the terminal device determines the first synchronization signal block SSB based on the first TCI state, and measures the first SSB in advance to obtain the first measurement result. After receiving the handover command, the terminal device measures, based on the first measurement result, the reference signal corresponding to the second TCI state, to obtain the second measurement result; and activates the second TCI state based on the second measurement result, where the activated second TCI state is used for data transmission. An SSB associated with a TCI state is measured in advance by using the first indication information, to quickly activate the TCI state. Therefore, communication interruption time of the terminal device is reduced, and communication quality of the terminal device is improved.

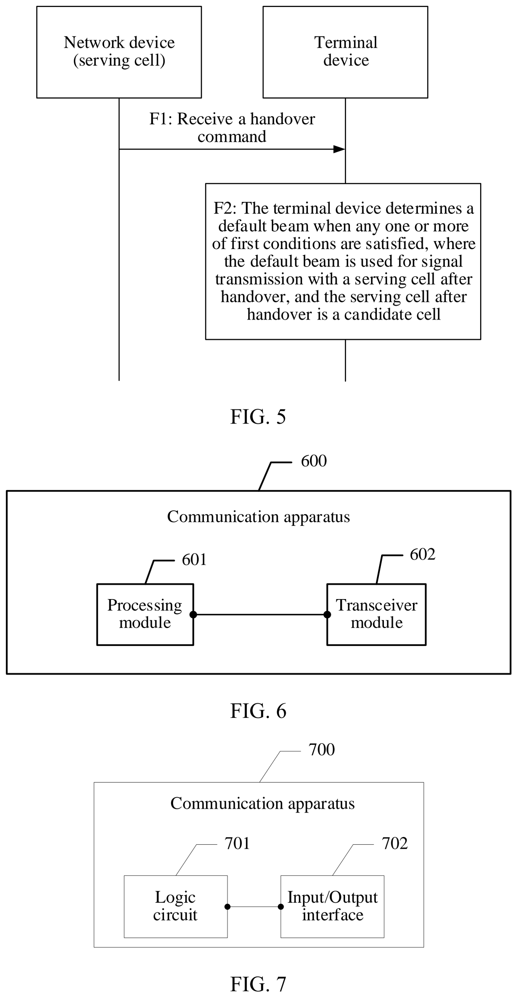

With reference to the foregoing embodiments, the beam-based communication method provided in embodiments of this application may be further used for determining a default beam, where the default beam is used for signal transmission between the terminal device and the serving cell after handover. FIG. 5 is a schematic flowchart of another embodiment of a beam-based communication method according to an embodiment of this application. The beam-based communication method provided in this embodiment of this application further includes the following steps.

F1: A terminal device receives a handover command from a network device.

In step F1, the handover command instructs the terminal device to be handed over from a serving cell to a candidate cell. The network device is a network device in the serving cell.

For example, the handover command is carried in a media access control control element MAC CE message.

Regarding the handover command, there are a plurality of possible cases, which are separately described below.
1. The handover command does not indicate a timing advance (timing advance, TA).
2. The handover command does not indicate a transmission configuration indicator TCI. That the handover command does not indicate the TCI includes that the handover command does not explicitly indicate the TCI.
3. The handover command indicates a TCI.
4. The handover command indicates a TA.

F2: The terminal device determines a default beam when any one or more of first conditions are satisfied, where the default beam is used for signal transmission with a serving cell after handover, and the serving cell after handover is the candidate cell.

In step F2, after receiving the handover command, the terminal device detects, based on the handover command, whether the first condition is satisfied. The terminal device determines the default beam when any one or more of the first conditions are satisfied, where the default beam is used for signal transmission with the serving cell after handover, and the serving cell after handover is the candidate cell.

Specifically, the first condition includes: The handover command does not indicate the transmission configuration indicator TCI, and the terminal device determines the TA based on a measurement result of a downlink reference signal; or
the handover command does not indicate the timing advance TA, and the terminal device determines the TA based on a measurement result of a downlink reference signal; or
the handover command indicates the TA, and the terminal device determines that a TA of the candidate cell is the same as a TA of the serving cell; or
the handover command indicates the TA, and the terminal device determines that a TA of the candidate cell is 0; or
the TCI indicated in the handover command is not activated in advance; or
a source reference signal of the TCI indicated in the handover command includes a channel state information reference signal CSI-RS, and the terminal device does not measure the CSI-RS before receiving the handover command; or
the handover command indicates the TCI, the terminal device feeds back a hybrid automatic repeat request acknowledgment HARQ-ACK based on the handover command, and a moment at which the HARQ-ACK is fed back does not reach a beam effective time point; or
the serving cell includes one primary cell (primary cell, PCell) and at least one secondary cell (secondary cell, SCell), or the candidate cell includes one primary cell and at least one secondary cell, and the primary cell and the secondary cell belong to a same timing advance group (timing advance group, TAG).

That the terminal device determines the TA based on the measurement result of the downlink reference signal includes: Before the terminal device is handed over from the serving cell to the candidate cell, the network device in the serving cell configures the terminal device. Specifically configured information includes but is not limited to: the terminal device calculating the timing advance based on a time difference between measured arrival time of an SSB of the serving cell and measured arrival time of an SSB of the candidate cell. Based on the configured information, the terminal device calculates the timing advance based on the time difference between the arrival time of the two SSBs.

After the terminal device determines that any one or more of the first conditions are satisfied, the terminal device determines the default beam. A specific method for determining the default beam is as follows:

In a possible implementation, the terminal device determines a second synchronization signal block SSB as the default beam, where the second SSB is an SSB of the candidate cell, and the second SSB is used for measuring the TA of the candidate cell, or the second SSB and a reference signal for measuring the TA of the candidate cell have a quasi-colocation QCL relationship. Specifically, that the terminal device determines the second SSB as the default beam includes:

In a possible implementation, the first condition is that the source reference signal of the TCI indicated in the handover command includes the channel state information reference signal CSI-RSCSI-RS, and the terminal device does not measure the CSI-RS before receiving the handover command. In addition, the handover command indicates the TA, and the terminal device determines that the TA of the candidate cell is 0. In this case, the terminal device uses, as the default beam, the second SSB that has a QCL relationship with the CSI-RS. Alternatively, the terminal device uses, as the default beam, a beam for receiving the second SSB, where the second SSB is a QCL reference source signal in a TCI configuration of the CSI-RS. In a possible implementation, the first condition is that the source reference signal of the TCI indicated in the handover command includes the channel state information reference signal CSI-RS, and the terminal device does not measure the CSI-RS before receiving the handover command. In addition, the handover command indicates the TA, and the terminal device determines, before being handed over, a random access resource based on the second SSB of the candidate cell and sends a preamble, where random access is triggered by sending a PDCCH command by the serving cell. In this case, the terminal device uses, as the default beam, the second SSB of the candidate cell in which a PDCCH of the serving cell before handover triggers random access, and the candidate cell in which the PDCCH triggers random access is a target cell indicated by the handover command.

In a possible implementation, the first condition is that the source reference signal of CSI-RSor a TRS, and the terminal device does not measure the CSI-RS or the TRS before receiving the handover command. In this case, the terminal device uses, as the default beam, the second SSB that has a QCL relationship with the CSI-RS or the TRS. A QCL type may be type D. Alternatively, the terminal device uses, as the default beam, a beam for receiving the second SSB, where the second SSB is a QCL reference source signal in a TCI configuration of the CSI-RS.

In a possible implementation, the first condition is that the handover command does not indicate the TCI. If the terminal device determines, before the handover command, the TA based on a measurement result of a time difference of arrival between a downlink reference signal of the candidate cell and a downlink reference signal of the serving cell, the terminal device uses, as the default beam, a beam for receiving the downlink reference signal of the candidate cell. The downlink reference signal of the candidate cell may be the second SSB, a CSI-RS, or another type of reference signal. This is not limited in embodiments of this application.

In a possible implementation, the first condition is that the handover command does not indicate the TCI. If the terminal device determines, before the handover command, a random access resource based on the second SSB of the candidate cell and sends a preamble, where random access is triggered by sending a PDCCH command by the serving cell, the terminal device uses, as the default beam, the second SSB of the candidate cell in which a PDCCH of the serving cell before handover triggers random access, and the candidate cell in which the PDCCH triggers random access is a target cell indicated by the handover command.

Optionally, the second SSB is a 1^{st} SSB in a first SSB set, the first SSB set includes a plurality of SSBs, and the first SSB set is used for measuring the TA of the candidate cell.

Optionally, the second SSB is an SSB that is of the candidate cell and that is most recently reported by the terminal device to the network device.

In another possible implementation, the terminal device determines, based on the handover command, a fifth TCI state indicated by the handover command; and the terminal device determines a first reference signal as the default beam, or the terminal device determines, as the default beam, a synchronization signal block SSB associated with a first reference signal, where the first reference signal is a reference signal indicated by quasi-colocation QCL information of the fifth TCI state. A type of the QCL information of the fifth TCI state may be type D. The first reference signal includes a CSI-RS or a TRS.

In another possible implementation, the terminal device determines, from synchronization signal blocks SSBs that are of the candidate cell and that are reported by the terminal device to the network device, an SSB having a highest reference signal received power; and the terminal device determines, as the default beam, the SSB having the highest reference signal received power.

In another possible implementation, the terminal device determines, as the default beam, a synchronization signal block SSB for measuring a TA of the primary cell.

Optionally, the default beam is used by the primary cell for signal transmission, and the default beam is further used by the secondary cell for signal transmission. The primary cell and the secondary cell are configured in a first set, and the first set is used for configuring a plurality of cells to update a beam based on at least one beam indication. For example, the first set may include cells indicated by a simultaneous beam-update list "simultaneousUTCI-Updatelist".

In another possible implementation, the terminal device obtains a TA of a target cell in the plurality of cells indicated by the first set, where the target cell is any cell indicated by the first set; the terminal device determines a third synchronization signal block SSB based on the TA of the target cell, where the third SSB is used for measuring the TA of the target cell, and the third SSB is an SSB of the candidate cell; and the terminal device determines the third SSB as the default beam of any one or more cells in the first set.

Further, the terminal device may alternatively select, based on the first condition that is satisfied, a corresponding manner to determine the default beam. Details are as follows:

In a possible implementation, that the terminal device determines the default beam when one or more of the following first conditions are satisfied includes: The first condition includes: The handover command does not indicate the transmission configuration indicator TCI, and the terminal device determines the TA based on the measurement result of the downlink reference signal; or the handover command does not indicate the timing advance TA, and the terminal device determines the TA based on the measurement result of the downlink reference signal.

That the terminal device determines the default beam includes: The terminal device determines a second synchronization signal block SSB as the default beam, where the second SSB is an SSB of the candidate cell, and the second SSB is used for measuring the TA of the candidate cell, or the second SSB and a reference signal for measuring the TA of the candidate cell have a quasi-colocation QCL relationship.

Optionally, the second SSB is a 1^{st} SSB in a first SSB set, the first SSB set includes a plurality of SSBs, and the first SSB set is used for measuring the TA of the candidate cell.

Optionally, the second SSB is an SSB that is of the candidate cell and that is most recently reported by the terminal device to the network device.

In another possible implementation, that the terminal device determines the default beam when one or more of the following first conditions are satisfied includes: The first condition includes: The handover command indicates the TA, and the terminal device determines that the TA of the candidate cell is the same as the TA of the serving cell; or the handover command indicates the TA, and the terminal device determines that the TA of the candidate cell is 0.

That the terminal device determines the default beam includes: The terminal device determines, based on the handover command, a fifth TCI state indicated by the handover command; and the terminal device determines a first reference signal as the default beam, or the terminal device determines, as the default beam, a synchronization signal block SSB associated with a first reference signal, where the first reference signal is a reference signal indicated by quasi-colocation QCL information of the fifth TCI state.

Optionally, a type of the QCL information of the fifth TCI state is type D, and the first reference signal is a channel state information reference signal CSI-RS.

In another possible implementation, that the terminal device determines the default beam when one or more of the following first conditions are satisfied includes: The first condition includes: The handover command indicates the TA, and the terminal device determines that the TA of the candidate cell is the same as the TA of the serving cell; or the handover command indicates the TA, and the terminal device determines that the TA of the candidate cell is 0.

That the terminal device determines the default beam includes: The terminal device determines, from synchronization signal blocks SSBs that are of the candidate cell and that are reported by the terminal device to the network device, an SSB having a highest reference signal received power; and the terminal device determines, as the default beam, the SSB having the highest reference signal received power.

In another possible implementation, the first condition further includes: The serving cell includes one primary cell and at least one secondary cell, or the candidate cell includes one primary cell and at least one secondary cell, and the primary cell and the secondary cell belong to a same timing advance group TAG.

That the terminal device determines the default beam includes: The terminal device determines, as the default beam, a synchronization signal block SSB for measuring a TA of the primary cell.

Optionally, the default beam is used by the primary cell for signal transmission, and the default beam is further used by the secondary cell for signal transmission. The primary cell and the secondary cell are configured in a first set, and the first set is used for configuring a plurality of cells to update a beam based on at least one beam indication.

Optionally, the terminal device obtains a TA of a target cell in the plurality of cells indicated by the first set, where the target cell is any cell indicated by the first set; the terminal device determines a third synchronization signal block SSB based on the TA of the target cell, where the third SSB is used for measuring the TA of the target cell, and the third SSB is an SSB of the candidate cell; and the terminal device determines the third SSB as the default beam of any one or more cells in the first set.

The foregoing describes this application from a perspective of the method, and the following further describes other embodiments provided in this application.

FIG. 6 is a diagram of implementation of a communication apparatus according to this application. The communication apparatus 600 includes a processing module 601 and a transceiver module 602. The communication apparatus 600 can implement functions of the communication apparatus (including the terminal device, the network device, and/or the like) in the foregoing method embodiments, and therefore can also achieve beneficial effects of the foregoing method embodiments. In this embodiment of this application, the communication apparatus 600 may be the terminal device and/or the network device, or may be an integrated circuit, an element, or the like inside the terminal device and/or the network device, for example, a chip.

The transceiver module 602 may implement a corresponding communication function. The transceiver module 602 may also be referred to as a communication interface or a communication unit, and is configured to implement signal receiving and sending or signal input and output. The processing module 601 is configured to perform a processing operation other than signal receiving and sending.

Optionally, the communication apparatus 600 may further include a storage module. The storage module may be configured to store instructions and/or data. The processing module 602 may read the instructions and/or the data in the storage module, to cause the communication apparatus to implement the method embodiments shown in FIG. 4 and FIG. 5.

The communication apparatus 600 may be configured to perform actions performed by the communication apparatus (the terminal device or the network device) in the foregoing method embodiments. The communication apparatus 600 may be a communication apparatus or a component that can be configured in the communication apparatus. The transceiver module 602 is configured to perform a receiving and sending-related operation on a communication apparatus side in the foregoing method embodiments, and the processing module 602 is configured to perform a processing-related operation on the communication apparatus side in the foregoing method embodiments.

Optionally, the transceiver module 602 may include a sending module and a receiving module. The sending module is configured to perform a sending operation of the communication apparatus in the foregoing method embodiments shown in FIG. 4 and FIG. 5. The receiving module is configured to perform a receiving operation of the communication apparatus in the foregoing method embodiments shown in FIG. 4 and FIG. 5.

It needs to be noted that the communication apparatus 600 may include the sending module but does not include the receiving module. Alternatively, the communication apparatus 600 may include the receiving module but does not include the sending module. This may be specifically determined depending on whether the foregoing solution performed by the communication apparatus 600 includes a sending action and a receiving action.

FIG. 7 is another diagram of a structure of a communication apparatus 700 according to this application. The communication apparatus 700 includes at least an input/output interface 702. The communication apparatus 700 may be a chip or an integrated circuit.

Optionally, the communication apparatus further includes a logic circuit 701.

The transceiver module 602 shown in FIG. 6 may be a communication interface. The communication interface may be the input/output interface 702 in FIG. 7, and the input/output interface 702 may include an input interface and an output interface. Alternatively, the communication interface may be a transceiver circuit, and the transceiver circuit may include an input interface circuit and an output interface circuit.

Optionally, when the communication apparatus 700 is the session management function (or a component in the session management function) in the foregoing embodiment, the input/output interface 702 is configured to input/output information. The logic circuit 701 is configured to perform the method performed by the terminal device and/or the network device in FIG. 4, FIG. 5, and related embodiments.

The logic circuit 701 and the input/output interface 702 may further perform other steps performed by the communication apparatus in any one of the embodiments, and implement corresponding beneficial effect. Details are not described herein again.

In a possible implementation, the processing module 601 shown in FIG. 6 may be the logic circuit 701 in FIG. 7.

Optionally, the logic circuit 701 may be a processing apparatus, and some or all of functions of the processing apparatus may be implemented by software. Some or all functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus, and the processor is connected to the memory via a circuit/wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more field-programmable gate arrays (field-programmable gate arrays, FPGAs), application-specific integrated circuits (application-specific integrated circuits, ASICs), systems on chip (systems on chip, SoCs), central processing units (central processing units, CPUs), network processors (network processors, NPs), digital signal processors (digital signal processors, DSPs), microcontroller units (microcontroller units, MCUs), programmable logic devices (programmable logic devices, PLDs), or other integrated chips, or any combination of the foregoing chips or processors.

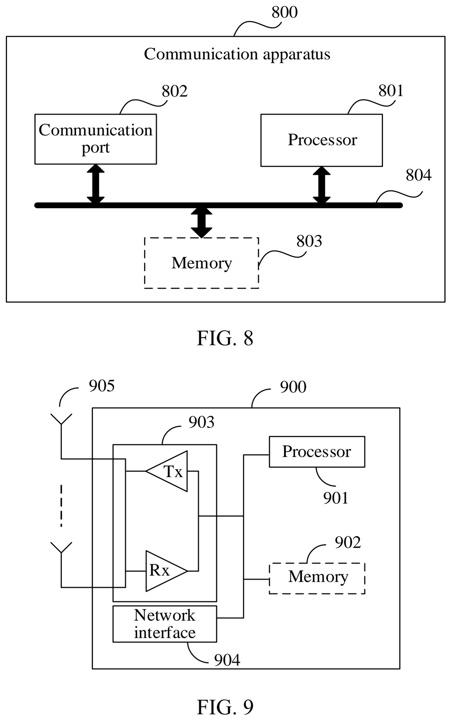

FIG. 8 shows a communication apparatus 800 in the foregoing embodiments according to an embodiment of this application. The communication apparatus 800 may be specifically the communication apparatus used as the terminal device and/or the network device in the foregoing embodiments.

In a possible diagram of a logical structure of the communication apparatus 800, the communication apparatus 800 may include but is not limited to at least one processor 801 and a communication port 802.

Further, optionally, the apparatus may further include at least one of a memory 803 and a bus 804. In this embodiment of this application, the at least one processor 801 is configured to control an action of the communication apparatus 800.

In addition, the processor 801 may be a central processing unit, a general-purpose processor, a digital signal processor, an application-specific integrated circuit, a field programmable gate array, another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be noted that the communication apparatus 800 shown in FIG. 8 may be specifically configured to implement steps implemented by the terminal device and/or the network device in the foregoing method embodiments, and implement technical effects corresponding to the terminal device and/or the network device. For a specific implementation of the communication apparatus shown in FIG. 8, refer to the description in the foregoing method embodiments. Details are not described herein again.

FIG. 9 is a diagram of a structure of a communication apparatus 900 in the foregoing embodiments according to an embodiment of this application. The communication apparatus 900 may be specifically the communication apparatus used as the terminal device and/or the network device in the foregoing embodiments. For a structure of the communication apparatus, refer to the structure shown in FIG. 9.

The communication apparatus 900 includes at least one processor 901 and at least one network interface 904. Further, optionally, the communication apparatus further includes at least one memory 902, at least one transceiver 903, and one or more antennas 905. The processor 901, the memory 902, the transceiver 903, and the network interface 904 are connected, for example, through a bus. In this embodiment of this application, the connection may include various interfaces, transmission lines, buses, or the like. This is not limited in this embodiment. The antenna 905 is connected to the transceiver 903. The network interface 904 is configured to enable the communication apparatus to communicate with another communication device through a communication link. For example, the network interface 904 may include a network interface between the communication apparatus and a core network device, for example, an S1 interface. The network interface may include a network interface between the communication apparatus and another communication apparatus (for example, another network device or core network device), for example, an X2 or Xn interface.

The processor 901 is mainly configured to: process a communication protocol and communication data; and control the entire communication apparatus, execute a software program, and process data of the software program. For example, the processor 901 is configured to support the communication apparatus in performing actions described in the foregoing method embodiments. The communication apparatus may include a baseband processor and a central processing unit. The baseband processor is mainly configured to process the communication protocol and the communication data. The central processing unit is mainly configured to: control an entire terminal device, execute the software program, and process the data of the software program. The processor 901 in FIG. 9 may integrate functions of the baseband processor and the central processing unit. A person skilled in the art may understand that the baseband processor and the central processing unit may alternatively be processors independent of each other, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 902 may exist independently, and is connected to the processor 901. Optionally, the memory 902 may be integrated with the processor 901, for example, integrated into a chip. The memory 902 can store program code for executing the technical solutions in embodiments of this application, and the processor 901 controls the execution. Various types of executed computer program code may also be considered as drivers of the processor 901.

FIG. 9 shows only one memory and one processor. In an actual terminal device, there may be a plurality of processors and a plurality of memories. The memory may also be referred to as a storage medium, a storage device, or the like. The memory may be a storage element located on a same chip as the processor, that is, an on-chip storage element, or may be an independent storage element. This is not limited in embodiments of this application.

The transceiver 903 may be configured to support receiving or sending of a radio frequency signal between the communication apparatus and a terminal. The transceiver 903 may be connected to the antenna 905. The transceiver 903 includes a transmitter Tx and a receiver Rx. Specifically, the one or more antennas 905 may receive a radio frequency signal. The receiver Rx of the transceiver 903 is configured to: receive the radio frequency signal from the antenna, convert the radio frequency signal into a digital baseband signal or a digital intermediate frequency signal, and provide the digital baseband signal or the digital intermediate frequency signal to the processor 901, so that the processor 901 performs further processing, for example, demodulation and decoding, on the digital baseband signal or the digital intermediate frequency signal. In addition, the transmitter Tx of the transceiver 903 is further configured to: receive a modulated digital baseband signal or digital intermediate frequency signal from the processor 901, convert the modulated digital baseband signal or digital intermediate frequency signal into a radio frequency signal, and send the radio frequency signal through the one or more antennas 905. Specifically, the receiver Rx may selectively perform single-stage or multi-stage down-conversion and analog-to-digital conversion on the radio frequency signal, to obtain a digital baseband signal or a digital intermediate frequency signal. A sequence of the down-conversion and the analog-to-digital conversion is adjustable. The transmitter Tx may selectively perform one-level or multi-level up frequency mixing processing and digital-to-analog conversion on the modulated digital baseband signal or digital intermediate frequency signal, to obtain the radio frequency signal. A sequence of the up frequency mixing processing and the digital-to-analog conversion is adjustable. The digital baseband signal and the digital intermediate frequency signal may be collectively referred to as a digital signal.

The transceiver 903 may also be referred to as a transceiver module, a transceiver machine, a transceiver apparatus, or the like. Optionally, a component configured to implement a receiving function in the transceiver module may be considered as a receiving unit, and a component configured to implement a sending function in the transceiver module may be considered as a sending unit. In other words, the transceiver module includes the receiving unit and the sending unit. The receiving unit may also be referred to as a receiver, an input port, a receive circuit, or the like. The sending unit may be referred to as a transmitter machine, a transmitter, a transmit circuit, or the like.

In this embodiment of this application, the antenna and the radio frequency circuit that have sending and receiving functions may be considered as the transceiver 903 of the terminal device, and a processing unit that has a processing function may be considered as the processor 901 of the terminal device. As shown in FIG. 9, the terminal device includes the transceiver 903 and the processor 901. The transceiver 903 may also be referred to as a transceiver unit, a transceiver machine, a transceiver apparatus, or the like. The processor 901 may also be referred to as a processing unit, a processing board, a processing module, a processing apparatus, or the like.

Optionally, a component that is in the transceiver 903 and that is configured to implement a receiving function may be considered as a receiving unit, and a component that is in the transceiver 903 and that is configured to implement a sending function may be considered as a sending unit. In other words, the transceiver 903 includes the receiving unit and the sending unit. The transceiver unit sometimes may also be referred to as a transceiver machine, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver 903 is configured to perform a sending operation and a receiving operation of the communication apparatus (the terminal device or the network device) in the foregoing method embodiments, and the processor 901 is configured to perform an operation other than the receiving operation and the sending operation on the communication apparatus (the terminal device or the network device) in the foregoing method embodiments.

When the communication apparatus is a chip, the chip includes a transceiver unit and a processing unit. The transceiver unit may be an input/output circuit or a communication interface. The processing unit is a processor, a microprocessor, an integrated circuit, or a logic circuit integrated on the chip.

It should be noted that the communication apparatus 900 shown in FIG. 9 may be specifically configured to implement steps implemented by the terminal device and/or the network device in the foregoing method embodiments, and implement technical effects corresponding to the terminal device and/or the network device. For a specific implementation of the communication apparatus 900 shown in FIG. 9, refer to the descriptions in the foregoing method embodiments. Details are not described herein again.

An embodiment of this application further provides a computer-readable storage medium storing one or more computer-executable instructions. When the computer-executable instructions are executed by a processor, the processor performs the method in the possible implementations of the terminal device or the network device in the foregoing embodiments.

An embodiment of this application further provides a computer program product (or referred to as a computer program) storing one or more computers. When the computer program product is executed by a processor, the processor performs the method in the possible implementations of the terminal device or the network device.

An embodiment of this application further provides a chip system. The chip system includes at least one processor, configured to support a communication apparatus in implementing the functions in the foregoing possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the terminal device or the network device in the foregoing method embodiments.

An embodiment of this application further provides a communication system. The communication system includes the terminal device and/or the network device in any one of the foregoing embodiments.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing module, or each of the units may exist alone physically, or two or more units are integrated into one unit. The integrated unit may be implemented in a form of hardware, or may be implemented in a form of a software functional unit. When the integrated unit is implemented in the form of a software functional unit and sold or used as an independent product, the integrated unit may be stored in a computer-readable storage medium. Based on such an understanding, the technical solutions of this application essentially, or a part making contributions, or all or some of the technical solutions may be implemented in a form of a software product. A computer software product is stored in a storage medium and includes several instructions for instructing a computer device (which may be a personal computer, a server, a radio access network, or the like) to perform all or some of the steps of the methods in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A beam-based communication method, comprising:
receiving, by a terminal device, first indication information of a transmission configuration indicator, wherein the first indication information is used for activating a TCI state of a candidate cell, the activated TCI state of the candidate cell comprises a first TCI state, and the first TCI state comprises one or more TCI states; and
measuring, by the terminal device, a first synchronization signal block SSB based on the first indication information, to obtain a first measurement result, wherein the first SSB and at least one channel state information reference signal CSI-RS have a quasi-colocation QCL relationship, the at least one CSI-RS is a reference signal in QCL information of the first TCI state, a type of the QCL information of the first TCI state is type A and/or type D, the first SSB is an SSB of the candidate cell, and the at least one CSI-RS is a CSI-RS of the candidate cell.

2. The method according to claim 1, wherein the method further comprises:
receiving, by the terminal device, a handover command, wherein the handover command instructs the terminal device to be handed over from a serving cell to the candidate cell, the handover command indicates a second TCI state, and the second TCI state belongs to the first TCI state;
measuring, by the terminal device based on the first measurement result, a reference signal corresponding to the second TCI state, to obtain a second measurement result; and
activating, by the terminal device, the second TCI state based on the second measurement result.

3. The method according to claim 1 or 2, wherein measuring, by the terminal device, the first synchronization signal block SSB based on the first indication information, to obtain the first measurement result comprises:
determining, by the terminal device, the QCL information of the first TCI state based on the first indication information;
determining, by the terminal device based on the QCL information of the first TCI state, the at least one CSI-RS corresponding to the first TCI state;
determining, by the terminal device, a third TCI state based on configuration information of the at least one CSI-RS, wherein the configuration information of the at least one CSI-RS comprises identification information of the third TCI state, and the third TCI state is used for determining a reception parameter for receiving a reference signal corresponding to the first TCI state;
determining, by the terminal device, the first SSB based on QCL information of the third TCI state, wherein the QCL information of the third TCI state comprises index information of the first SSB; and
measuring, by the terminal device, the first SSB, to obtain the first measurement result.

4. The method according to claim 3, wherein a quasi-colocation QCL type of the third TCI state is type C and type D.

5. The method according to any one of claims 1 to 4, wherein the first TCI state further comprises a fourth TCI state, and a quasi-colocation QCL type of the fourth TCI state is type C and type D.

6. The method according to claim 5, wherein measuring, by the terminal device, the first synchronization signal block SSB based on the first indication information, to obtain the first measurement result comprises:
determining, by the terminal device, QCL information of the fourth TCI state based on the first indication information, wherein the QCL information of the fourth TCI state indicates that a source reference signal of the fourth TCI state comprises an SSB;
determining, by the terminal device, the first SSB based on the QCL information of the fourth TCI state, wherein the QCL information of the fourth TCI state comprises the index information of the first SSB; and
measuring, by the terminal device, the first SSB, to obtain the first measurement result.

7. The method according to any one of claims 1 to 6, wherein before receiving, by the terminal device, the first indication information, the method further comprises:
receiving, by the terminal device, configuration information, wherein the configuration information comprises QCL information of the TCI state of the candidate cell and/or related information of the CSI-RS of the candidate cell.

8. The method according to any one of claims 1 to 7, wherein before measuring, by the terminal device based on the first measurement result, the reference signal corresponding to the second TCI state, to obtain the second measurement result, the method further comprises:
determining, as a default beam by the terminal device based on the first measurement result, a TCI corresponding to the first SSB, wherein the default beam is used for signal transmission with a serving cell after handover, and the serving cell after handover is the candidate cell.

9. The method according to any one of claims 1 to 8, wherein a TCI corresponding to a reference signal in the first TCI state is not allowed to be indicated by the handover command, or a TCI corresponding to a reference signal in the first TCI state is not allowed to be used for data transmission after the handover command is received.

10. A beam-based communication method, comprising:
receiving, by a terminal device, a handover command, wherein the handover command instructs the terminal device to be handed over from a serving cell to a candidate cell; and
determining, by the terminal device, a default beam when any one or more of first conditions are satisfied, wherein the default beam is used for signal transmission with a serving cell after handover, and the serving cell after handover is the candidate cell, wherein
the first condition comprises: the handover command does not indicate a transmission configuration indicator TCI, and the terminal device determines a TATA based on a measurement result of a downlink reference signal; or
the handover command does not indicate a timing advance TA, and the terminal device determines the TA based on a measurement result of a downlink reference signal; or
the handover command indicates a TA, and the terminal device determines that a TA of the candidate cell is the same as a TA of the serving cell; or
the handover command indicates a TA, and the terminal device determines that a TA of the candidate cell is 0; or
a TCI indicated in the handover command is not activated in advance; or
a source reference signal of a TCI indicated in the handover command comprises a channel state information reference signal CSI-RS, and the terminal device does not measure the CSI-RS before receiving the handover command; or
the handover command indicates a TCI, the terminal device feeds back a hybrid automatic repeat request acknowledgment HARQ-ACK based on the handover command, and a moment at which the HARQ-ACK is fed back does not reach a beam effective time point.

11. The method according to claim 10, wherein determining, by the terminal device, the default beam when one or more of the following first conditions are satisfied comprises:
the first condition comprises: the handover command does not indicate the transmission configuration indicator TCI, and the terminal device determines the TA based on the measurement result of the downlink reference signal; or the handover command does not indicate the timing advance TA, and the terminal device determines the TA based on the measurement result of the downlink reference signal;
determining, by the terminal device, the default beam comprises: determining, by the terminal device, a second synchronization signal block SSB as the default beam, wherein the second SSB is an SSB of the candidate cell, and the second SSB is used for measuring the TA of the candidate cell, or the second SSB and a reference signal for measuring the TA of the candidate cell have a quasi-colocation QCL relationship.

12. The method according to claim 11, wherein determining, by the terminal device, the default beam when one or more of the following first conditions are satisfied comprises:
the first condition comprises: the handover command indicates the TA, and the terminal device determines that the TA of the candidate cell is the same as the TA of the serving cell; or the handover command indicates the TA, and the terminal device determines that the TA of the candidate cell is 0;
determining, by the terminal device, the default beam comprises:
determining, by the terminal device based on the handover command, a fifth TCI state indicated by the handover command; and
determining, by the terminal device, a first reference signal as the default beam, or determining, as the default beam by the terminal device, a synchronization signal block SSB associated with a first reference signal, wherein the first reference signal is a reference signal indicated by quasi-colocation QCL information of the fifth TCI state.

13. The method according to claim 12, wherein a type of the QCL information of the third TCI state is type D; and
the first reference signal is a channel state information reference signal CSI-RS.

14. The method according to claim 11, wherein determining, by the terminal device, the default beam when one or more of the following first conditions are satisfied comprises:
the first condition comprises: the handover command indicates the TA, and the terminal device determines that the TA of the candidate cell is the same as the TA of the serving cell; or the handover command indicates the TA, and the terminal device determines that the TA of the candidate cell is 0;
determining, by the terminal device, the default beam comprises:
determining, by the terminal device from synchronization signal blocks SSBs that are of the candidate cell and that are reported by the terminal device to a network device, an SSB having a highest reference signal received power; and
determining, as the default beam by the terminal device, the SSB having the highest reference signal received power.

15. The method according to claim 11, wherein the first condition further comprises: the serving cell comprises one primary cell and at least one secondary cell, or the candidate cell comprises one primary cell and at least one secondary cell, and the primary cell and the secondary cell belong to a same timing advance group TAG; and
determining, by the terminal device, the default beam comprises:
determining, as the default beam by the terminal device, a synchronization signal block SSB for measuring a TA of the primary cell.

16. The method according to claim 15, wherein
the default beam is used by the primary cell for signal transmission, and the default beam is further used by the secondary cell for signal transmission; and
the primary cell and the secondary cell are configured in a first set, and the first set is used for configuring a plurality of cells to update a beam based on at least one beam indication.

17. A communication apparatus, comprising:
a transceiver module, configured to receive first indication information of a transmission configuration indicator, wherein the first indication information is used for activating a TCI state of a candidate cell, the activated TCI state of the candidate cell comprises a first TCI state, and the first TCI state comprises one or more TCI states; and
a processing module, configured to measure a first synchronization signal block SSB based on the first indication information, to obtain a first measurement result, wherein the first SSB and at least one channel state information reference signal CSI-RS have a quasi-colocation QCL relationship, the at least one CSI-RS is a reference signal in QCL information of the first TCI state, a type of the QCL information of the first TCI state is type A and/or type D, the first SSB is an SSB of the candidate cell, and the at least one CSI-RS is a CSI-RS of the candidate cell.

18. The communication apparatus according to claim 17, wherein
the transceiver module is further configured to receive a handover command, wherein the handover command instructs the terminal device to be handed over from a serving cell to the candidate cell, the handover command indicates a second TCI state, and the second TCI state belongs to the first TCI state;
the processing module is further configured to measure, based on the first measurement result, a reference signal corresponding to the second TCI state, to obtain a second measurement result; and
the processing module is further configured to activate the second TCI state based on the second measurement result.

19. The communication apparatus according to claim 17 or 18, wherein
the processing module is further configured to determine the QCL information of the first TCI state based on the first indication information;
the processing module is further configured to determine, based on the QCL information of the first TCI state, the at least one CSI-RS corresponding to the first TCI state;
the processing module is further configured to determine a third TCI state based on configuration information of the at least one CSI-RS, wherein the configuration information of the at least one CSI-RS comprises identification information of the third TCI state, and the third TCI state is used for determining a reception parameter for receiving a reference signal corresponding to the first TCI state;
the processing module is further configured to determine the first SSB based on QCL information of the third TCI state, wherein the QCL information of the third TCI state comprises index information of the first SSB; and
the processing module is further configured to measure the first SSB to obtain the first measurement result.

20. The communication apparatus according to claim 19, wherein a quasi-colocation QCL type of the third TCI state is type C and type D.

21. The communication apparatus according to any one of claims 17 to 20, wherein the first TCI state further comprises a fourth TCI state, and a quasi-colocation QCL type of the fourth TCI state is type C and type D.

22. The communication apparatus according to claim 21, wherein
the processing module is further configured to determine QCL information of the fourth TCI state based on the first indication information, wherein the QCL information of the fourth TCI state indicates that a source reference signal of the fourth TCI state comprises an SSB;
the processing module is further configured to determine the first SSB based on the QCL information of the fourth TCI state, wherein the QCL information of the fourth TCI state comprises the index information of the first SSB; and
the processing module is further configured to measure the first SSB to obtain the first measurement result.

23. The communication apparatus according to any one of claims 17 to 22, wherein
the transceiver module is further configured to receive configuration information, wherein the configuration information comprises QCL information of the TCI state of the candidate cell and/or related information of the CSI-RS of the candidate cell.

24. The communication apparatus according to any one of claims 17 to 23, wherein
the processing module is further configured to determine, as a default beam based on the first measurement result, a TCI corresponding to the first SSB, wherein the default beam is used for signal transmission with a serving cell after handover, and the serving cell after handover is the candidate cell.

25. The communication apparatus according to any one of claims 17 to 24, wherein a TCI corresponding to a reference signal in the first TCI state is not allowed to be indicated by the handover command, or a TCI corresponding to a reference signal in the first TCI state is not allowed to be used for data transmission after the handover command is received.

26. A communication apparatus, comprising:
a transceiver module, configured for a terminal device to receive a handover command, wherein the handover command instructs the terminal device to be handed over from a serving cell to a candidate cell; and
a processing module, configured to determine a default beam when any one or more of first conditions are satisfied, wherein the default beam is used for signal transmission with a serving cell after handover, and the serving cell after handover is the candidate cell, wherein
the first condition comprises: the handover command does not indicate a transmission configuration indicator TCI, and the terminal device determines a TA based on a measurement result of a downlink reference signal; or
the handover command does not indicate a timing advance TA, and the terminal device determines the TA based on a measurement result of a downlink reference signal; or
the handover command indicates a TA, and the terminal device determines that a TA of the candidate cell is the same as a TA of the serving cell; or
the handover command indicates a TA, and the terminal device determines that a TA of the candidate cell is 0; or
a TCI indicated in the handover command is not activated in advance; or
a source reference signal of a TCI indicated in the handover command comprises a channel state information reference signal CSI-RS, and the terminal device does not measure the CSI-RS before receiving the handover command; or
the handover command indicates a TCI, the terminal device feeds back a hybrid automatic repeat request acknowledgment HARQ-ACK based on the handover command, and a moment at which the HARQ-ACK is fed back does not reach a beam effective time point.

27. The communication apparatus according to claim 26, wherein
that the processing module is further configured to determine the default beam when one or more of the following first conditions are satisfied comprises:
the first condition comprises: the handover command does not indicate the transmission configuration indicator TCI, and the terminal device determines the TA based on the measurement result of the downlink reference signal; or the handover command does not indicate the timing advance TA, and the terminal device determines the TA based on the measurement result of the downlink reference signal;
that the processing module is further configured to determine the default beam comprises: the terminal device determines a second synchronization signal block SSB as the default beam, wherein the second SSB is an SSB of the candidate cell, and the second SSB is used for measuring the TA of the candidate cell, or the second SSB and a reference signal for measuring the TA of the candidate cell have a quasi-colocation QCL relationship.

28. The communication apparatus according to claim 27, wherein
that the processing module is further configured to determine the default beam when one or more of the following first conditions are satisfied comprises:
the first condition comprises: the handover command indicates the TA, and the terminal device determines that the TA of the candidate cell is the same as the TA of the serving cell; or the handover command indicates the TA, and the terminal device determines that the TA of the candidate cell is 0;
the processing module is further configured to determine, based on the handover command, a fifth TCI state indicated by the handover command; and
the processing module is further configured to determine a first reference signal as the default beam, or configured for the terminal device to determine, as the default beam, a synchronization signal block SSB associated with a first reference signal, wherein the first reference signal is a reference signal indicated by quasi-colocation QCL information of the fifth TCI state.

29. The communication apparatus according to claim 28, wherein a type of the QCL information of the third TCI state is type D; and
the first reference signal is a channel state information reference signal CSI-RS.

30. The communication apparatus according to claim 27, wherein
that the processing module is further configured to determine the default beam when one or more of the following first conditions are satisfied comprises:
the first condition comprises: the handover command indicates the TA, and the terminal device determines that the TA of the candidate cell is the same as the TA of the serving cell; or the handover command indicates the TA, and the terminal device determines that the TA of the candidate cell is 0;
the processing module is further configured to determine, from synchronization signal blocks SSBs that are of the candidate cell and that are reported by the terminal device to a network device, an SSB having a highest reference signal received power; and
the processing module is further configured to determine, as the default beam, the SSB having the highest reference signal received power.

31. The communication apparatus according to claim 27, wherein the processing module is further configured to:
the first condition further comprises: the serving cell comprises one primary cell and at least one secondary cell, or the candidate cell comprises one primary cell and at least one secondary cell, and the primary cell and the secondary cell belong to a same timing advance group TAG;
determine, as the default beam, a synchronization signal block SSB for measuring a TA of the primary cell.

32. The communication apparatus according to claim 30, wherein
the default beam is used by the primary cell for signal transmission, and the default beam is further used by the secondary cell for signal transmission; and
the primary cell and the secondary cell are configured in a first set, and the first set is used for configuring a plurality of cells to update a beam based on at least one beam indication.

33. A communication apparatus, comprising a communication interface and a processor, wherein
the communication interface is configured to input and/or output signaling or data; and
the processor is configured to execute a computer-executable program, to perform the method according to any one of claims 1 to 9, or perform the method according to any one of claims 10 to 16.

34. A communication apparatus, comprising a processor and a memory, wherein
the memory is configured to store a computer program or a computer program or instructions; and
the processor is configured to execute the computer program or the computer program or the instructions in the memory, to perform the method according to any one of claims 1 to 9, or perform the method according to any one of claims 10 to 16.

35. A computer-readable storage medium, comprising a computer program or instructions, wherein when the computer program or the instructions are executed by a processor, the method according to any one of claims 1 to 9 or claims 10 to 16 is implemented.

36. A chip system, wherein the chip system comprises at least one processor, and when program instructions are executed in the at least one processor, the method according to any one of claims 1 to 9 or claims 10 to 16 is implemented.

37. A communication system, comprising a communication apparatus configured to perform the method according to any one of claims 1 to 9 and/or a communication apparatus configured to perform the method according to any one of claims 10 to 16.
